# EUROPEAN PATENT SPECIFICATION

(11) **EP 2 979 108 B1**
(45) Date of publication and mention of the grant of the patent: **25.07.2018**
(21) Application number: 13722837.5
(22) Date of filing: 26.03.2013
(51) Int. Cl.: G01S 5/02

(54) **UTILIZING SHORTENED DERIVATIVES OF IDENTIFIERS OF ENTITIES OF COMMUNICATION SYSTEMS FOR RETRIEVING POSITIONING INFORMATION**
VERWENDUNG VERKÜRZTER DERIVATE VON IDENTIFIKATOREN VON EINHEITEN VON KOMMUNIKATIONSSYSTEMEN ZUM ABRUFEN VON ORTUNGSINFORMATIONEN
UTILISATION DE DÉRIVÉS RACCOURCIS D'IDENTIFICATEURS D'ENTITÉS DE SYSTÈMES DE COMMUNICATION À DES FINS DE RÉCUPÉRATION D'INFORMATIONS DE POSITIONNEMENT

(43) Date of publication of application: 03.02.2016
(73) Proprietor: Nokia Technologies Oy, 02610 Espoo (FI)
(72) Inventor: WIROLA, Lauri Aarne Johannes, FI-33580 Tampere (FI); SYRJÄRINNE, Jari Tapani, FI-33700 Tampere (FI); BLOMQVIST, MikkoJuhani, FI-37500 Lempäälä (FI); WIROLA, Laura, FI-33580 Tampere (FI)
(74) Representative: Cohausz & Florack
(86) International application number: PCT/IB2013/052406
(87) International publication number: WO 2014/155151

(56) References cited:
- WO-A1-2012/032376
- US-A1- 2008 176 583
- US-A1- 2011 227 790
- US-A1- 2011 244 885

## Description

### FIELD OF THE DISCLOSURE

The invention relates to the field of retrieving positioning information by utilizing identifiers of entities of communication systems. Such positioning information can in particular be used for determining position estimates, in particular for offline usage.

### BACKGROUND

Modern global cellular and non-cellular positioning technologies are based on generating large global databases containing information on cellular and non-cellular signals. The information may originate entirely or partially from users of these positioning technologies acting as data collectors.

The data provided by these data collectors is typically in the form of "fingerprints", which contain a location that is estimated based on, e.g., received satellite signals of a global navigation satellite system (GNSS) and measurements taken from one or more radio interfaces for signals of a cellular and/or non-cellular radio system or network. In the case of measurements on cellular signals, the results of the measurements may contain a global and/or local identification of the cellular system cells observed, their signal strengths and/or pathlosses and/or timing measurements like timing advance (TA) or round-trip time (RTT). For measurements on wireless local area network (WLAN) signals, as an example of signals of a non-cellular communication system, the results of the measurements may contain a basic service set identification (BSSID), like the medium access control (MAC) address of observed access points, and/or the service set identifier (SSID) of the access points, and/or the signal strength of received signals (received signal strength indication RSSI or physical Rx level in dBm with a reference value of 1 mW, etc.), and/or pathloss estimates and/or timing measurements (like e.g. RTT).

This data may then be transferred to a server or cloud, where the data (usually of a multitude of users) may be collected and where a database with sets of positioning information, for instance a radiomap, for positioning purposes may be generated (or updated) based on the data. Such a set of positioning information, e.g. a radiomap, can for instance comprise estimates for respective coverage areas of base stations (coverage area estimates) and/or radio channel models, wherein a base station serves as an example for an entity, in this case o node, of a communication system.

In the end, this database may be used for estimating the position of for instance mobile terminals. This may function in two modes. The first mode is the terminal-assisted mode, in which the mobile terminal performs the measurements of the cellular and/or non-cellular air interface, provides the measurements to the remote server, which in turn, based on the database, determines and provides the position estimate back to the mobile terminal. The second mode is the terminal-based mode, in which the mobile terminal has a local copy of the database (or only a subset of the global database). This subset copy is downloaded by the mobile terminal from a remote server for the area of interest (e.g. a small area around the current location, for a whole country, or so). This subset copy can of course be pre-installed to the mobile terminal in the factory, but even in that case the data needs to be refreshed at some point.

United States patent application US 201 1/227790 A1 discloses storing and retrieving beacon reference data in a truncated cuckoo hash table. Checksums of beacon identifiers associated with beacons are used to retrieve beacon reference data describing locations of the beacons in a hash table.

### SUMMARY OF SOME EXAMPLE EMBODIMENTS OF THE INVENTION

The database, for instance the radiomap data files, can be very large in size. To exemplify, in certain urban/suburban areas covering roughly 10 × 10 km there can be more than 10 million WLAN access points (APs), which means an average density of one AP every 10m² or 400,000 APs per 2 × 2 km tile. Transferring the radiomap information for each of those APs to the mobile terminal is very burdensome and consumes a lot of server resources, network bandwidth and data over air, in turn resulting in high costs for the user of the mobile terminal. For instance, in the above example, just transferring the BSSIDs for the 10 million APs as radiomap data consumes 10.000.000 · 6 bytes = 60 Mbytes of radiomap data. Similarly, also, in the cellular radiomap case, the number of neighbor cells can grow so high that the radiomap files consume a lot of transmission bandwidth and mobile terminal storage. It is readily seen that transferring such large amounts of data over e.g. a cellular communication system is not feasible especially under roaming conditions, since data transmission costs may be significantly higher in a foreign (roaming) network as compared to data transmission costs in a home network.

In particular, a database comprising sets of positioning information comprising for instance BSSIDs, such as WLAN BSSIDs, cannot be packed as, for example, identifiers associated with respective entities of cellular communication systems, whose identifiers generally have a hierarchy facilitating packing. In accordance with the present invention, a method, an apparatus and a computer program code, as set forth in the independent claims are provided. Additional embodiments of the invention are claimed in the dependent claims. As a first embodiment of the present invention, a first method according to claim 1 is described.

The apparatus is for instance a mobile terminal, such as a cellular phone, a laptop computer, a tablet computer, a multimedia player, a personal digital assistant, or a part thereof. For instance, the apparatus is or forms a part (e.g. as a module) of a mobile terminal or server. For instance, the apparatus may obtain the identifier associated with an entity of a communication system by retrieving the identifier wirelessly. The apparatus may also obtain the identifier from another entity that is different from the apparatus, to which entity the apparatus can establish a connection.

For instance, the communication system may be a cellular or non-cellular communication system. A cellular communication system is for instance a second generation (2G, for instance the Global System for Mobile Communication (GSM), the General Packet Radio System (GPRS), the Enhanced Data Rates for GSM Evolution (EDGE) or the High Speed Circuit-Switched Data (HSCSD)), third generation (3G, for instance the Universal Mobile Telecommunication System, UMTS, WCDMA, TD-SCDMA or CDMA-2000) or fourth generation (4G, for instance the Long Term Evolution, LTE, system, the LTE Advanced (LTE-A) system or the IEEE 802.16m WiMAX system) communication system. A non-cellular (radio) communication system is for instance a WLAN network, a Bluetooth (LE) system, a ZigBee system, a radio-frequency identification (RFID) system, a broadcasting system such as for instance Digital Video Broadcasting (DVB), Digital Audio Broadcasting (DAB) or Frequency-Modulated (FM) / Amplitude-Modulated (AM) radio, a Near Field Communication (NFC) system, etc. A cellular communication system may for instance be characterized by a basically seamless pavement of a geographical area (usually in the order of at least hundreds or thousands of square kilometers) with cells in which coverage is provided by respective nodes of the communication system that are operated by the same operator, which system may for instance support communication handover between cells. Consequently, a non-cellular communication system may be characterized as a communication system that does not have all of these properties.

For instance, an entity of a communication system may be a node or a cell of the above cellular communication systems or a node of the above non-cellular communication systems, such as an access point, for example a WLAN AP, for instance according to one or more of the IEEE 802.11 family of standards. A WLAN may for example operate on a single frequency band (2.4 GHz according to IEEE 802.11b/g or 5.0 GHz according to IEEE 802.11a/h, representing the two frequency bands 2.4-2.4835 GHz, and 5.15-5.725 GHz, respectively), or on two frequencies bands (2.4 GHz and 5.0 GHz according to IEEE 802.11n, again representing the two frequency bands 2.4-2.4835 GHz, and 5.15-5.725 GHz, respectively).

Accordingly, non-limiting examples of obtained identifiers associated with an entity of a communication system are cellular cell identifiers (e.g. a Mobile Country Code (MCC), a Mobile Network Code (MNC), a Local Area Code (LAC) and/or a Cell Identity (CID) in case of coverage areas of a 2G mobile communications system, a UTRAN Cell ID (UC-ID) in case of a 3G mobile communications system, or an LTE Cell Identity in case of a 4G communications system), and identifiers of WLAN access points (e,g. a BSSID, such as a Medium Access Control (MAC) identifier, or an SSID of a WLAN access point).

The shortened derivative is shortened compared to the identifier it is generated from. For instance, the shortened derivative has a shorter length than the identifier it is generated from. The shortened derivative is for instance generated by applying a mathematical operation on the identifier, by mapping the identifier onto the shortened derivative and/or by using a hash function, as will be explained in further detail below. The shortened derivative, for instance, may unambiguously be generated from the respective identifier, but not vice versa, i.e. the shortened derivative does not necessarily allow for deducing the identifier it was generated from.

Advantageously, the shortened derivative may for instance need less memory when stored compared to the identifier, from which the shortened derivative is generated. A shortened derivative may also lead to reduced consumption of transmission bandwidth, transmission costs and/or resources when data comprising a shortened derivative instead of the identifier is transferred, for example. The shortened derivative may be generated by reducing its length compared to the identifier, from which the shortened derivative is generated. For example, the identifier may be a certain byte number (e.g. a 6-byte number), while the shortened derivative generated from the identifier may be a number having less bytes (e.g. a 2-byte number).

A set of positioning information associated with the entity of the communication system may for instance comprise information about the geographical position of the entity of the communication system, such as coordinates of the entity of the communication system. A set of position information may additionally or alternatively comprise coverage area model information and/or radio channel model information of the entity it is associated with, as will be explained in detail below.

By using the shortened derivative of the identifier to retrieve a set of positioning information associated with the entity of the communication system, the retrieved positioning information may be used for determining a position estimate, for instance for the apparatus or for a device comprising the apparatus.

According to the first embodiment, the identifier is used to at least try retrieving a set of positioning information associated with the entity of the communication system, and the generating, from the identifier, of the shortened derivative of the identifier and the using of the shortened derivative of the identifier to retrieve a set of positioning information associated with the entity of the communication system is performed in case a set of positioning information associated with the entity of the communication system cannot be retrieved using the identifier. For instance, the generating of the shortened derivative and the using of the shortened derivative may only be performed in case a set of positioning information associated with the entity of the communication system cannot be retrieved using the identifier. Therefore, the generation of the shortened derivative of the identifier may be conditional.

According to a second embodiment of the present invention, the first embodiment of the invention has the further feature that the set of positioning information is retrievable from a database that stores a plurality of shortened derivatives of respective identifiers associated with respective entities of one or more communication systems and respective sets of positioning information associated with the respective entities of the one or more communication systems.

The database may for instance be stored in a memory of the apparatus. The database may also be stored by an entity that is different from the apparatus. The database may for example comprise a single file or multiple files. The database may for instance be pre-installed on the apparatus or download to the apparatus. The database may store a plurality of shortened derivatives of respective identifiers associated with respective entities of only one kind of communication system, for example only of non-cellular communication systems or only of WLAN systems. The database may, however, also store plurality of shortened derivatives of respective identifiers associated with respective entities of different kinds of communication systems. For instance, for each shortened derivative of the plurality of shortened derivatives of respective identifiers associated with respective entities of one or more communication systems, there is stored at least one set of positioning information associated with the respective entities of the one or more communication systems. For instance, each of the plurality of shortened derivatives of respective identifiers associated with respective entities of one or more communication systems is associated with at least a respective set of positioning information associated with the respective entity of the one or more communication systems.

The respective sets of positioning information associated with the respective entities of the one or more communication systems may comprise information such as coordinates of the respective entity of the respective communication system. At least a part of a set of positioning information, for example coordinates, may also be stored by using coordinate deltas or run length encoding.

According to the second embodiment, the database may further store one or more identifiers associated with respective entities of one or more communication systems and respective positioning information associated with the respective entities of the one or more communication systems.

For instance, for one or more sets of positioning information associated with the respective entities of the one or more communication systems, the database may not or not only store shortened derivatives, but additionally or alternatively the identifier associated with the respective entities of the one or more communication systems. The identifiers may thus also be used to obtain respective sets of positioning information. In other words, the one or more identifiers associated with respective entities of one or more communication systems and respective positioning information associated with the respective entities of the one or more communication systems may be stored in the database without storing a shortened derivative of the respective identifier. Optionally, both, the identifier and a shortened derivative of the identifier generated from the identifier may be stored in the database for a certain set of positioning information.

The identifiers stored in the database may for instance be chosen at least based on a characteristic or respective characteristics of to the entities of the one or more communication systems associated with the identifiers (as will be explained in further detail below), for instance in order to mitigate or exclude effects of ambiguities in the database.

Therein, at least one identifier (and not a shortened derivative thereof) stored in the database may be used to retrieve a respective set of positioning information associated with the respective entity of the one or more communication systems without generating a shortened derivative for the at least one identifier stored in the database.

For example, before generating a shortened derivative of an obtained identifier associated with an entity of a communication system, the apparatus may try to use the identifier to retrieve a set of positioning information. In case the identifier is not stored in the database, a set of positioning information cannot be retrieved and a shortened derivative may then be generated from the identifier and be used instead to retrieve a set of positioning information.

An exemplary embodiment of the first method may therefore comprise
- obtaining an identifier associated with an entity of a communication system,
- using the identifier to try retrieving a set of positioning information associated with the entity of the communication system, and
- if a set of positioning information associated with the entity of the communication system cannot be retrieved using the identifier,
   - generating, from the identifier, a shortened derivative of the identifier, and
   - using the shortened derivative of the identifier to retrieve a set of positioning information associated with the entity of said communication system.

In another example, the apparatus may only try to use the identifier to retrieve a set of positioning information, in case there is an ambiguity (i.e. more than one set of positioning information is retrieved using a shortened derivative) or in case the ambiguity cannot be solved.

According to a third embodiment of the present invention, the second embodiment of the invention has the further feature that the shortened derivative generated from the identifier associated with the entity of the communication system is not unique among the plurality of shortened derivatives of identifiers stored in the database.

A not unique shortened derivative may for instance arise, when the number of possible shortened derivatives is smaller than the number of shortened derivatives of identifiers stored in the database. A not unique shortened derivative may also arise regardless of the number of possible shortened derivatives, for instance when the shortened derivative is generated from the identifier associated with the entity of the communication system and the shortened derivative generated from the identifier associated with the entity of the communication system equals one or more of the plurality of shortened derivatives of identifiers stored in the database.

The shortened derivative generated from the identifier associated with the entity of the communication system not being unique among the plurality of shortened derivatives of identifiers stored in the database may result in ambiguities in the database. For instance, multiple sets of positioning information associated with the respective entities of the one or more communication systems may be associated with equal shortened derivatives generated from different identifiers associated with respective entities of respective one or more communication systems.

Therein, the identifier associated with the entity of the communication system may be less ambiguous among said identifiers associated with said respective entities of said one or more communication systems for which a plurality of shortened derivatives is stored in said database than its shortened derivative among the plurality of shortened derivatives stored in said database. In an extreme case, the identifier associated with the entity of the communication system may be unique among said identifiers associated with said respective entities of said one or more communication systems for which a plurality of shortened derivatives is stored in said database. The identifier associated with the entity of the communication system may also be unique among the identifiers at least in the respective communication system, but may also be unique in all other communication systems. To name an example, an administered BSSID is, by definition, (at the moment) globally unique. However, since there is only a finite number of possible BSSIDs, such an identifier may also become non-unique in the future. Equally well however, an entity of a communication system may for instance have an identifier that is (already at the moment) not unique (e.g. only locally unique) in the communication system. This may be true for a (only) locally administered BSSID, for example a locally administered MAC address. The not unique identifier may however be unique in a subregion of the region covered by the communication system.

In order to further reduce the degree of ambiguity of an identifier, it is for instance possible to use an identifier which includes further information, for instance an area code (e.g. of a cellular communication system) of the area in which the entity, which is associated with the identifier, is located. For instance, the identifier may be a BSSID in combination with the mobile country code (MCC). This would reduce ambiguities of identifiers associated with entities of one or more communication systems from different countries, for example.

According to a fourth embodiment of the present invention, the third embodiment of the invention has the further feature that at least two sets of positioning information associated with different respective entities of the one or more communication systems are retrieved from the database using the shortened derivative and at least one set of positioning information of the at least two sets of positioning information is disregarded (for instance with respect to determining a position estimate).

Since in case the shortened derivative generated from the identifier associated with the entity of the communication system is not unique among the plurality of shortened derivatives of identifiers stored in the database and the shortened derivative is used to retrieve a set of positioning information associated with the entity of the communication system, there may be at least two sets of positioning information stored in the database and associated with equal shortened derivatives. In that case all sets of positioning information stored in the database associated with the shortened derivative used to retrieve a set of positioning information associated with the entity of the communication system may be retrieved from the database. At least one set of positioning information of the at least two sets of positioning information may then be disregarded. To this end, at least one set of positioning information of the at least two sets of positioning information may for example be excluded from further calculations. For instance, at least one set of positioning information of the at least two sets of positioning information may be disregarded when a position estimate is determined. In this way, the effect of ambiguities in the database may be mitigated.

According to the fourth embodiment of the present invention, in case at least one identifier stored in the database is used to retrieve a respective set of positioning information without generating a shortened derivative for the at least one identifier stored in the database, at least one set of positioning information of the at least two sets of positioning information may be disregarded at least based on the at least one set of positioning information retrieved using the at least one identifier stored in the database without generating a shortened derivative for the at least one identifier stored in the database.

According to the fourth embodiment of the present invention, at least one set of positioning information of the at least two sets of positioning information may be disregarded at least based on an available position estimate for the apparatus or for a mobile terminal comprising the apparatus.

An available position estimate may for instance comprise a position estimate determined or obtained before or after retrieving the at least two sets of positioning information associated with different respective entities of the one or more communication systems using the shortened derivative. For instance, the retrieval of the at least two sets of positioning information associated with different respective entities of the one or more communication systems using the shortened derivative may trigger a determination of a position estimate for the apparatus or for a mobile terminal comprising the apparatus, which is then available. For instance, the available position estimate may be based on a continuously repeated determining of a position estimate for the apparatus or for a mobile terminal comprising the apparatus, which may for instance be performed by a background process.

The available position estimate may for instance have been determined at least based on one or more cellular communication systems, on one or more non-cellular communication systems or on a GNSS system, to name a few examples.

The available position estimate may for instance have been determined at least based on one or more sets of positioning information respectively pertaining to one or more entities of one or more cellular communication systems, and the retrieved set of position information may for instance pertain to one or more non-cellular communication systems.

While the one or more sets of positioning information respectively pertaining to one or more entities of one or more cellular communication systems may allow for a comparatively rough available position estimate, this available position estimate may then be determined more precisely by utilizing the retrieved set of position information pertaining to one or more non-cellular communication systems. Utilizing both, sets of positioning information pertaining to a cellular communication system and to a non-cellular communication system may increase the precision and/or speed of a position estimate for the apparatus or for a mobile terminal comprising the apparatus.

According to a fifth embodiment of the present invention, the fourth embodiment of the invention has the further feature that the first method further comprises:
- obtaining one or more further identifiers associated with respective entities of one or more communication systems,
- generating, from the one or more further identifiers, respective shortened derivatives of the one or more further identifiers,
- using the respective shortened derivatives of the one or more further identifiers to retrieve respective sets of positioning information associated with the respective entities of the one or more communication systems from the database,
wherein at least one set of positioning information of the at least two sets of positioning information that are associated with different respective entities of the one or more communication systems and are retrieved from the database using the shortened derivative is disregarded at least based on a determined inconsistency between the at least one disregarded set of positioning information and at least one of the respective sets of positioning information retrieved using the respective shortened derivatives of the one or more further identifiers.

Some or all of the obtained one or more further identifiers associated with respective entities of one or more communication systems may pertain to the same communication system, for example a non-cellular communication system. For instance, the obtained identifier and the obtained one or more further identifiers may pertain to the same communication system. The obtained one or more further identifiers may for instance all pertain to entities of the same communication system. Regarding further exemplary embodiments and advantages with respect to the generating, from the one or more further identifiers, of respective shortened derivatives of the one or more further identifiers, and the using of the respective shortened derivatives of the one or more further identifiers to retrieve respective sets of positioning information associated with the respective entities of the one or more communication systems from the database, it is referred to the first to fourth embodiments of the present invention.

An inconsistency between two sets of positioning information may for instance be based on a contradiction between the two sets of positioning information. For instance, there may be no possible position estimate, for which the at least two identifiers associated with the different respective entities of the one or more communication systems would have been obtainable according to the at least two sets of position information.

The incompatibility between the at least one disregarded set of positioning information and the at least one of the respective sets of positioning information retrieved using the respective shortened derivatives of the one or more further identifiers may be determined from a lack of commonality in positioning information between the at least one disregarded set of positioning information and the at least one of the respective sets of positioning information retrieved using the respective shortened derivatives of the one or more further identifiers.

For instance, in case the sets of positioning information comprise coverage area model information and/or radio channel model information associated with respective entities of one or more communication system, the lack of commonality in positioning information may be based on a lack of geographical overlap of the at least two coverage areas associated with the respective entities of the one or more communication systems.

According to the fifth embodiment of the present invention, at least three sets of positioning information associated with different respective entities of the one or more communication systems may be retrieved from the database using the shortened derivative of the identifier, the shortened derivative of the identifier and at least one of the shortened derivatives generated from the one or more further identifiers may be equal and at least one set of positioning information retrieved using the shortened derivative of the identifier may be disregarded based at least on lack of commonality in positioning information between the at least three sets of positioning information retrieved using the shortened derivative of the identifier.

According to the first to fifth embodiments of the present invention, the apparatus may be one of a mobile terminal and a part thereof and the first method may further comprise:
- determining a position estimate for the mobile terminal at least based on at least one of the retrieved set of positioning information.

Additionally, the determination of the position estimate may at least be based on further retrieved (and not disregarded) sets of positioning information. The determination of the position estimate may for instance also be based on all retrieved and not disregarded sets of positioning information. The determination of the position estimate may for instance further be based on an available position estimate, which may be based on one or more sets of positioning information respectively pertaining to one or more entities of one or more cellular or non-cellular communication systems.

According to the second to fifth embodiments of the present invention, the first method may further comprise:
- obtaining the database at least in part, in particular wirelessly, from an entity that is different from the apparatus or that is different from a mobile terminal that comprises the apparatus.

The entity that is different from the apparatus or from a mobile terminal that comprises the apparatus may for instance be or form a part (e.g. as a module) of a server. A connection between the apparatus and the entity that is different from the apparatus or that is different from a mobile terminal that comprises the apparatus may for instance be established over a cellular or non-cellular communication system, in particular a wireless communication system. For instance, the connection may be an internet connection. For instance the database maybe updated by obtaining a part of the database.

The database may for instance be obtained, if it is determined that no or an insufficient database is stored by the apparatus or a mobile terminal comprising the apparatus. This may be the case when it is determined that a present or a (likely) future position estimate for the apparatus or mobile terminal comprising the apparatus is not covered by the database, for instance. This may also be the case when it is determined that an available database stored by the apparatus or a mobile terminal comprising the apparatus has expired (e.g. is older than a predefined life time, for example 6 months).

Therein, the obtained database may be a subset of a larger database, the larger database pertaining to a geographical region and the obtained database pertaining to a geographical subregion of the geographical region of the larger database.

The geographical region, to which the larger database pertains, may be the surface of the earth or a part thereof, for instance a continent, a country, a city or an area etc. The larger database may be stored on the entity that is different from the apparatus or that is different from a mobile terminal that comprises the apparatus. The larger database may be generated and/or updated on the entity that is different from the apparatus or that is different from a mobile terminal that comprises the apparatus. The geographical subregion, to which the obtained database pertains, may be a part of the surface of the earth, for instance a continent, a country, a city, an area or a part thereof.

By using a database pertaining to a geographical subregion of the geographical region of the larger database, a reduced consumption of storage space, transmission bandwidth, transmission costs and/or resources related to the storing, handling and transferring of the database may be achieved. In the same way, ambiguities among the plurality of shortened derivatives of respective identifiers associated with respective entities of one or more communication systems stored in the obtained database may also be reduced.

The geographical subregion of the obtained database may be a determined area of interest. The determined area of interest may in particular be determined at least based on an available position estimate for the apparatus or for a mobile terminal comprising the apparatus.

The determined area of interest is for instance a geographical (sub-)region, in which the position of the apparatus is highly likely and/or assumed to lie, e.g. based on an available position estimate for the apparatus or for a mobile terminal comprising the apparatus.

The determined area of interest is for instance a geographical (sub-)region, in which the position of the apparatus will be highly likely and/or assumed to lie in the future. For instance, the determined area of interest may be based on an area in which the user of the apparatus or of a mobile terminal comprising the apparatus lives. As people tend to live their daily live in a well-defined area, the determined area of interest may be based on this area. It may also be the case that the user downloads a map of certain area to the terminal (e.g. because the user is traveling there). Then it can be anticipated that the area of interest relates to (e.g. is part of/comprises/is) the certain area for which a map was downloaded. Exemplarily, the database may be obtained together with the map download.

Furthermore, a second method is described, which is performed by an apparatus. The method comprises obtaining an identifier associated with an entity of a communication system. The method further comprises obtaining a set of positioning information associated with the identifier. The method further comprises generating, from the identifier, a shortened derivative of the identifier. The method further comprises associating the shortened derivative with the set of positioning information.

For instance, the apparatus is or forms a part (e.g. as a module) of a server. The apparatus may also be a mobile terminal, such as a cellular phone, a laptop computer, a tablet computer, a multimedia player, a personal digital assistant, or a part thereof.

For instance, the apparatus may obtain the identifier associated with an entity of a communication system and/or the set of positioning information associated with the identifier from a database and/or from another entity that is different from the apparatus, with which entity the apparatus may communicate. The apparatus may also obtain the identifier and/or the set of positioning information wirelessly. For instance, the identifier associated with an entity of a communication system and/or the set of positioning information associated with the identifier may first be obtained by a mobile terminal. The identifier associated with an entity of a communication system and/or the set of positioning information associated with the identifier may then be obtained by the apparatus from the mobile terminal. The apparatus may then perform the generating, from the identifier, the shortened derivative of the identifier and associating the shortened derivative with the set of positioning information.

The set of positioning information may not only be associated with the identifier but also with the entity of the communication system.

The second method may further comprise:
- providing the set of positioning information associated with the shortened derivative of the identifier for retrieval by a server and/or a mobile terminal.

Additionally, the respective shortened derivative of the identifier may be provided for retrieval by a server and/or a mobile terminal. For instance, the shortened derivative of the identifier and/or the respective set of positioning information associated with the shortened derivative may be stored in a database and the database or a part thereof may be provided.

The second method may be performed for a plurality of identifiers associated with respective entities of one or more communication systems but the generating, from the identifier, of the shortened derivative of the identifier, and the associating of the shortened derivative with the set of positioning information may only be performed for a subset of a plurality of identifiers associated with respective entities of one or more communication systems and with respective sets of positioning information associated with the respective entities of the one or more communication systems.

For instance, the generating, from the identifier, of the shortened derivative of the identifier, and the associating of the shortened derivative with the set of positioning information may only be performed for every second or every third identifier just to name two non-limiting examples. For instance, a database may comprise identifiers of respective entities of one or more communication systems and respective sets of positioning information associated with the respective identifiers. The identifier associated with an entity of a communication system and the set of positioning information associated with the identifier may be obtained from the database. After, for a subset of a plurality of identifiers associated with respective entities of one or more communication systems, generating, from the identifier, the shortened derivative of the identifier, and associating the shortened derivative with the set of positioning information, the database may comprise both, sets of position information associated with identifiers and sets of positioning information associated with shortened derivatives of the identifiers.

The identifiers associated with the respective sets of positioning information, which are not associated with a respective shortened derivative, may be chosen at least based on a characteristic or respective characteristics of the entities of the one or more communication systems associated with the identifiers associated with respective sets of positioning information, which are not associated with a respective shortened derivative.

For instance, the identifiers associated with the respective sets of positioning information, which are not associated with a respective shortened derivative, may be chosen at least based on the characteristic of a spatially substantially evenly distribution (e.g. in a specific area) of the entities of the one or more communication systems associated with the identifiers associated with respective sets of positioning information, which are not associated with a respective shortened derivative.

A spatially substantially even distribution may, for instance, be realized by randomly selecting the identifiers associated with the respective sets of positioning information, which are not associated with a respective shortened derivative. Such a distribution may help mitigate or even exclude ambiguities in the database.

According to the first to fifth embodiments of the present invention and according to the second method, at least the set of positioning information obtained or, respectively, retrieved based on the shortened derivative of the identifier may be usable for determining a position estimate for the apparatus or a mobile terminal comprising the apparatus performing the first method of the present invention.

In case one or more further sets of positioning information are retrieved from the database, as for example according to the fifth embodiment of the present invention, also one or more further sets of positioning information retrieved may be usable for determining the position estimate. A set of positioning information usable for determining a position estimate may in particular comprise coverage area model information and/or radio channel model information of the entity it is associated with.

According to the first to fifth embodiments of the present invention and according to the second method, the entity may be a cell or node of a cellular communication system or a node of a non-cellular communication system.

A cell or a node of a cellular communication system may be a cell or a node of the cellular communication systems already mentioned in a non-limiting way, such as a 2G, 3G or 4G communication systems. For instance, a node or cell of these cellular communication systems may be a base station or a sector of such a cellular communication system, respectively. A node of a non-cellular communication system may be a node of the non-cellular communication systems already mentioned in a non-limiting way, such as a WLAN network. For instance, a node of these communication systems may be a base station, an access point or a beacon of such a non-cellular communication system.

According to the first to fifth embodiments of the present invention and according to the second method, the generating of the shortened derivative of the identifier may comprise performing a mathematical operation according to a predefined algorithm on the identifier to obtain the shortened derivative of the identifier.

The generating of the shortened derivative may comprise more than one mathematical operation. A mathematical operation may be a transformation, for instance. The mathematical operation according to a predefined algorithm may provide rules for the generating the shortened derivative of the identifier from the identifier. The one or more mathematical operations may constitute a function associating an identifier with a shortened derivative of the respective identifier. The function may in particular not be a bijective function. Preferably, the predefined algorithm is deterministic, such that the same identifier is always mapped onto the same shortened derivative.

According to the first to fifth embodiments of the present invention and according to the second method, the generating of the shortened derivative of the identifier may comprise mapping the identifier onto the shortened derivative by means of a many-to-one mapping.

Many-to-one mapping is understood to mean that elements of a domain (e.g. the possible identifiers) can be mapped onto the same element of a codomain (e.g. the possible shortened derivatives), which is true for a function which is not injective, for instance. By allowing mapping different identifiers to the same shortened identifier, a derivative of an arbitrary identifier may be generated despite the derivative being shortened compared to the identifier it is generated from. However, this implicates accepting possible ambiguities among the shortened derivatives. Such ambiguities or effects thereof may, however, be mitigated or solved, for example as explained with respect to the fourth embodiment of the present invention.

According to the first to fifth embodiments of the present invention and according to the second method, the generating of the shortened derivative of the identifier may comprise using a hash function, the hash function comprising one of a cyclic redundancy check algorithm and/or a selection of one or more parts of the identifier.

In cyclic redundancy check algorithms a shortened check value of an input value is obtained, which is or is based on the remainder of a polynomial division. If the identifier is used as the input value, the obtained shortened check value may then be used for generating the shortened derivative of the identifier. For instance, the shortened derivative may be the shortened check value. Examples of cyclic redundancy checks are for instance, the CRC-8, CRC-16, CRC-32, CRC-64 algorithms, wherein the numbers relate to the length of the polynomial used for polynomial division. For instance, a cyclic redundancy check algorithm allowed by the sector of the International Telecommunication Union ITU-T may be used, for instance the CRC-16 ITU-T algorithm.

For instance, if the identifier is an n-byte number, the shortened derivative may be a n-x-byte number (with 0 < x < n). For instance, as a non-limiting example, the identifier may be 6 bytes long. Thus the identifier may take a value in the range of [0, 2⁴⁸-1]. After using the CRC-16 ITU-T algorithm the identifier is mapped to a value in the range of [0, 2¹⁶-1], that means the shortened derivative of the identifier would be 2 bytes long. This yields a reduction by a factor of 3. Still assuming a 6-byte identifier, with a CRC-8 or CRC-24 algorithm, a one- or three-byte number, respectively, could be generated as well.

In case the hash function comprises a selection of one or more parts of the identifier, this may be realized by selecting one or more bytes of the identifier. For instance, if the identifier is an n byte number, n-x bytes (with 0 < x < n) may be selected from the identifier to generate the shortened derivative. For instance, the two lowest bytes of the identifier may be selected as the shortened derivative.

In case the identifier is a BSSID of a WLAN AP of a WLAN network, the identifier may be a 6-byte number with the upper three bytes being the IEEE-granted Organization Unique Identifier (OUI) and the lower three bytes being the OUI-specific part. A selection of one or more parts of the identifier may comprise selecting a byte of the OUI (for instance, the lowest) and a byte of the OUI specific part (for instance, the lowest).

According to the first to fifth embodiments of the present invention and according to the second method, the shortened derivative generated from the identifier may provide at least a reduction by a factor of 6/5, preferably 3/2, more preferably 2 and most preferably 3 compared to the identifier.

By providing a higher reduction (i.e. a higher factor) a reduced consumption of storage space, transmission bandwidth, transmission costs and/or resources related to the storing, handling and transferring of the shortened derivatives may be achieved. However, by providing a higher reduction a higher degree of ambiguities among the shortened derivatives must be accepted.

According to the first to fifth embodiments of the present invention and according to the second method, the set of positioning information may comprise information about at least one of a geographical position, coverage area model information and radio channel model information of the entity it is associated with.

A coverage area generally depends on a plurality of parameters of both the entity of the communication system that provides the coverage area (inter alia antenna beamwidth and positioning, transmission power) and the propagation environment (inter alia pathloss and shadowing caused by obstructing elements). A model of a coverage area (also denoted as coverage area model herein) may for instance be or at least be desired to be derivative of a coverage area. However, at least temporary deviations may occur between the model and the actual coverage area, for instance in case of changes or movement of the coverage area. A model for a coverage area may for instance be a model representing hard boundaries of a coverage area, or a model that represents a coverage area in a statistical sense, for instance by means of a probability (density) function. An example of such a statistical representation of a coverage model is a multi-normal distribution. A coverage area model may only be a coarse model of a coverage area, e.g. an elliptical or polygonal model. The coverage area model may equally well be constituted by a set of grids of a grid of regions, e.g. a rectangular grid of regions. In a simple exemplary case, a coverage area model may be represented by a position of the coverage providing entity and/or information on the reach of this coverage providing entity.

As an alternative or addition to coverage area model information, also radio channel model information (aka radio propagation models) for entities of communication systems may be provided with a set of positioning information and may for instance serve as a basis for determining a position of a mobile terminal, if a mobile terminal is able to measure a received signal strength and/or a path loss. A radio channel model may for instance describe how the power of a signal emitted by an entity of a communication system decays with increasing distance from the communication system, for instance under consideration of further parameters as for instance the radio transmission frequency. To this end, the radio channel model may for instance take into account effects of free space propagation, slow fading and fast fading, to name but a few examples. The radio channel model may for instance be parameterized by and/or characterized by one or more parameters, such as for instance a path loss exponent, as it is known to a person skilled in the art.

Now, if radio channel model information (for instance comprising an identifier of the radio channel model to be used, for instance in case that more than one radio channel model is in use, and/or one or more of the parameters characterizing the radio channel model, so that the radio channel model for instance indicates the pathloss as a function of the distance between the transmitting entity and the mobile terminal) is available for an entity of a communication system, for which an identifier associated with the entity of the communication system is obtained, and if a strength of a signal from this entity of the communication system as received at the mobile terminal (or the path loss experienced by this signal) has been measured at the mobile terminal, an estimate of the distance towards the entity of the communication system can be determined and exploited (e.g. among further information) to determine a position estimate for the mobile terminal. This may additionally require knowledge of the transmission power level of the signal as used by the entity of the communication system, which may for instance be pre-defined, included into the radio channel model or signaled to the mobile terminal, to name but a few examples.

As further embodiments of the present invention, moreover, a first apparatus is described, which is configured to realize or comprises respective means for realizing the actions of the first method (and/or any of its embodiments described herein).

Furthermore a second apparatus is described, which is configured to realize or comprises respective means for realizing the actions of the second method (and/or any of its embodiments described herein).

The means of these apparatuses can be implemented in hardware and/or software. They may comprise for instance a processor, e.g. for executing computer program code for realizing the required functions, a memory storing the program code, or both. Alternatively, they could comprise for instance circuitry that is designed to realize the required functions, for instance implemented in a chipset or a chip, like an integrated circuit.

As further embodiments of the present invention, moreover a third apparatus is described, which comprises at least one processor and at least one memory including computer program code, the at least one memory and the computer program code configured to, with the at least one processor, cause an apparatus at least to perform the actions of the first method (and/or any of its embodiments described herein).

Furthermore, a fourth apparatus is described, which comprises at least one processor and at least one memory including computer program code, the at least one memory and the computer program code configured to, with the at least one processor, cause an apparatus at least to perform the actions of the second method (and/or any of its embodiments described herein).

Any of the described apparatuses may comprise only the indicated components or one or more additional components. Any of the described apparatuses may be a module or a component for a device, for example a chip. Alternatively, any of the described apparatuses may be a device, for instance a server or a mobile terminal. Any of the described apparatuses may for instance at least comprise a user interface, a communication interface and/or an antenna.

As further embodiments of the present invention, moreover a first non-transitory (e.g. tangible) computer readable storage medium is described, in which computer program code is stored, which causes an apparatus to realize the actions of the first method (and/or any of its embodiments described herein) when executed by a processor. It is to be understood that also the computer program code by itself has to be considered an embodiment of the invention.

Furthermore, a second non-transitory computer readable storage medium is described, in which computer program code is stored, which causes an apparatus to realize the actions of the second method (and/or any of its embodiments described herein) when executed by a processor.

The computer readable storage medium could be for example a disk or a memory or the like. The computer program code could be stored in the computer readable storage medium in the form of instructions encoding the computer-readable storage medium. The computer readable storage medium may be intended for taking part in the operation of a device, like an internal or external hard disk of a computer, or be intended for distribution of the program code, like an optical disc.

The features and embodiments of the invention described above may equally pertain to the first method, first and third apparatus and first non-transitory computer readable storage medium according to the present invention and also to the second method, second and fourth apparatus and second non-transitory computer readable storage medium. For the sake of simplicity of presentation, some of the embodiments of the present invention were numbered, wherein this numbering shall however not imply a specific importance or shall not exclude any other embodiments in any way.

It is to be understood that the presentation of embodiments of the invention in this section is merely exemplary and non-limiting.

Other features of the present invention will become apparent from the following detailed description considered in conjunction with the accompanying drawings. It is to be understood, however, that the drawings are designed solely for purposes of illustration and not as a definition of the limits of the invention, for which reference should be made to the appended claims. It should be further understood that the drawings are not drawn to scale and that they are merely intended to conceptually illustrate the structures and procedures described herein.

### BRIEF DESCRIPTION OF THE FIGURES

- Fig. 1: is a schematic illustration of a positioning system in which example embodiments of apparatuses according to the present invention are deployed;
- Fig. 2: is a block diagram of one of the apparatuses of Fig. 1 according to an exemplary embodiment of the invention;
- Fig. 3: is a flow chart illustrating a method according to an exemplary embodiment of the invention for instance performed by the apparatus of Fig. 2;
- Fig. 4: is a block diagram of the other apparatus of Fig. 1 according to a further exemplary embodiment of the invention;
- Fig. 5: is a flow chart illustrating a method for instance performed by the apparatus of Fig. 4;
- Fig. 6: is a flow chart illustrating a method according to another exemplary embodiment of the invention for instance performed by the apparatus of Fig. 2;
- Fig. 7: is a flow chart illustrating a method according to another exemplary embodiment of the invention for instance performed by the apparatus of Fig. 2;
- Fig. 8: is a flow chart illustrating a method according to a further exemplary embodiment of the invention for instance performed by the apparatuses of Fig. 2 and 4;
- Fig. 9: illustrates an exemplary distribution of the number of identifiers being mapped onto the same shortened derivatives,
- Fig. 10: illustrates an exemplary embodiment of a geographical region;
- Fig. 11: a schematic illustration of examples of tangible storage media according to the present invention.

### DETAILED DESCRIPTION OF EXAMPLE EMBODIMENTS OF THE INVENTION

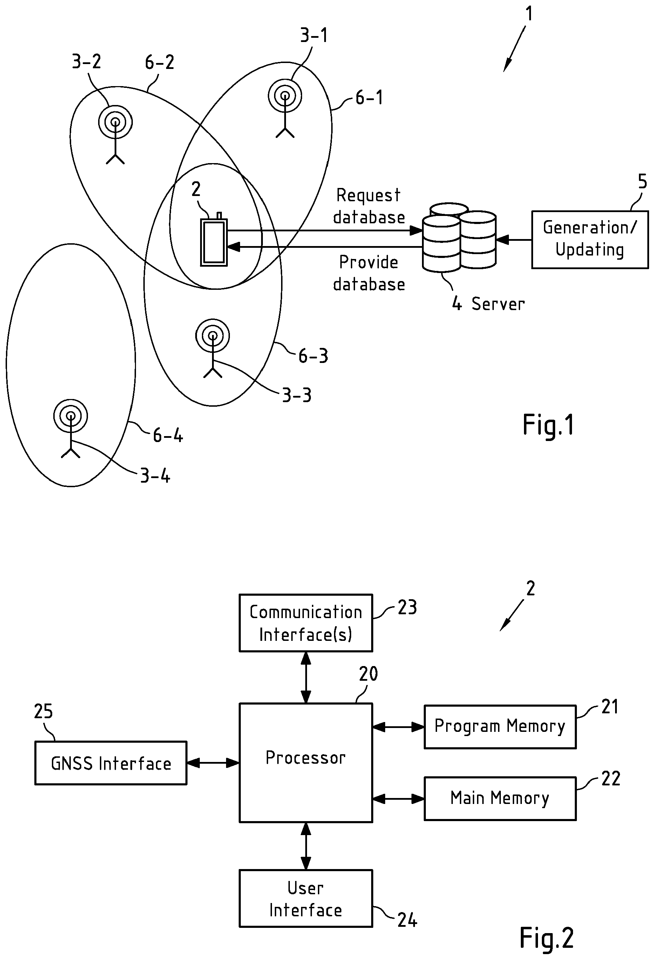

Fig. 1 shows a positioning system 1, in which example embodiments of apparatuses according to the present invention can be deployed. In Fig. 1, mobile terminal 2 is capable of obtaining identifiers associated with entities 3-1, 3-2 and 3-3 of one or more communication systems, but not the identifier associated with entity 3-4. Each of entities 3-1, 3-2, 3-3 and 3-4 provides radio coverage in a respective coverage area 6-1, 6-2, 6-3 and 6-4. Based on models of the coverage areas and/or radio channel models of the entities 3-1, 3-2 and 3-3, mobile terminal 2 is capable of determining its position, for instance as an intersection of coverage areas 6-1, 6-2 and 6-3, or by triangulation, to name but a few non-limiting examples. As already described, non-limiting examples of entities of communication systems are cells, nodes or base stations (or sectors thereof) of a cellular communication system, such as for instance a 2G, 3G or 4G communication system, or a node (e.g. an AP) or a beacon of a non-cellular communication system, such as for instance a WLAN network.

For instance, if one or more sets of positioning information associated with an entity of the communication system are retrieved, then the set of positioning information may be used to determine a position estimate for the mobile terminal based on at least one of the retrieved set of position information. The set of position information may for instance comprise coverage area model information and/or radio channel model information.

Obtaining an identifier associated with an entity of a communication system by an apparatus, such as a mobile terminal or part thereof, may for instance require hat the mobile terminal is able to observe, e.g. to receive and correctly decode an identifier of the entity of the communication system that provides the coverage area, for instance basic service set identification (BSSID), such as a Medium Access Control (MAC) address, a service set identifier (SSID) or another identifier). For this, it may be required that the mobile terminal is able to receive one or more signals (e.g. a broadcast channel) of the entity of the communication system, which are for example sent by the entity with a pre-defined minimum quality (for instance defined in terms of a signal-to-noise ratio or a signal-to-noise and interference ratio), and/or is able to at least partially receive and correctly decode one or more signals of the entity, for example signals send by a node. Some or all of these conditions for obtaining an identifier associated with an entity of a communication system may for instance be met when the mobile terminal is within the coverage area of the entity of the communication system.

An entity of a communication system may for instance have an identifier that is unique (e.g. globally unique) at least in the communication system (and for instance also in all other communication systems). Equally well, an entity of a communication system may for instance have an identifier that is not unique (e.g. only locally unique) in the communication system, but that is at least unique in a subregion of the region covered by the communication system.

Obtaining an identifier (or information in general) from the entity of the communication system may for instance require that the mobile terminal is technically capable to receive such an identifier or such information. Thus, a mobile terminal may have to support the transmission technology (e.g. the communication standard) used by the entity. Receiving signals or information from the entity may also require that the mobile terminal is entitled to communicate with or at least receive signals or information from the entity.

If radio channel model information (for instance comprising an identifier of the radio channel model to be used, for instance in case that more than one radio channel model is in use, and/or one or more of the parameters characterizing the radio channel model, so that the radio channel model for instance indicates the pathloss as a function of the distance between the transmitting entity and the mobile terminal) is available for an entity of a communication system, for which an identifier associated with the entity of the communication system is obtained, and if a strength of a signal from this entity of the communication system as received at the mobile terminal (or the path loss experienced by this signal) has been measured at the mobile terminal, an estimate of the distance towards the entity of the communication system can be determined and exploited (e.g. among further information) to determine a position estimate for the mobile terminal. This may additionally require knowledge of the transmission power level of the signal as used by the entity of the communication system, which may for instance be pre-defined, included into the radio channel model or signaled to the mobile terminal, to name but a few examples.

For instance, consider the exemplary case where the mobile terminal obtains three identifiers associated with the respective three entities of a communication system. Based only on the coverage area models for the entities of the communication system, which coverage area models are exemplarily considered to be elliptical, the position estimate for the mobile terminal would be obtained as the intersection of three ellipses (as schematically shown in Fig. 1). By further considering the radio channel models for the entities of the communication system and measured received signal strengths at the mobile terminal with respect to each of these entities of the communication system, the position estimate for the mobile terminal can be further narrowed down by considering the distances from the mobile terminal to the three entities of the communication system, ideally yielding an intersection of three arcs (the radius of each given by the respective distance from the mobile terminal to the respective entity of the communication system, the position of which is for instance contained in the elliptical coverage area models) somewhere within the intersection of the three ellipses. The obtained identifiers may be cellular cell identifiers (e.g. of a 2G, a 3G or a 4G communication system), or identifiers of non-cellular identifiers (e.g. a BSSID, such as a Medium Access Control (MAC) identifier, or an SSID of a WLAN access point).

Information on the coverage areas 6-1, 6-2 and 6-3 of the respective communication system entities 3-1, 3-2 and 3-3 is contained in sets of positioning information that mobile terminal 2 may requests from server 4. Server 4 stores a plurality of sets of positioning information, which are for instance generated by generation/updating unit 5, which may either be the same unit as server 4, or may be separate (and even remote) therefrom. The sets of positioning information, in particular the coverage area model information and/or the radio channel model information contained therein, may for instance be generated/updated based on so-called "fingerprints" (measurements comprising a position of a mobile terminal and a list of one or more entities of one or more communication systems that the mobile terminal was able to identify at that current position, optionally also with an indication of the received signal strength and/or of the estimated path loss, for instance to allow derivation of radio channel model information) provided by mobile terminals acting as data collectors.

According to embodiments of the present invention, shortened derivatives of one or more or all the obtained identifiers associated with the entities 3-1, 3-2, 3-3 are generated from the identifiers. Beforehand or afterwards the mobile terminal 2 may request, from server 4, one or more sets of positioning information, for instance in a database (or a part thereof) stored on the server. The (part of the) database may comprise sets of positioning information associated with respective entities 3-1, 3-2, 3-3 (and also 3-4). The (part of the) database may further comprise the shortened derivatives of the obtained identifiers associated with the entities 3-1, 3-2, 3-3 (and also 3-4). As illustrated in Fig. 1, mobile terminal 2 obtains, in response to the request, a database from server 4. The database may for instance be requested by mobile terminal 2 each time when mobile terminal 2 enters into or is activated in a geographical area, for which no database is yet available at mobile terminal 2. By using the (part of the) obtained database and on the shortened derivatives generated from the identifiers of the nodes 3-1, 3-2 and 3-3 that mobile terminal 2 can currently obtain, the mobile terminal 2 may determine a position estimate for the mobile terminal based (at least) on the sets of position information retrieved with the (part of the) database (terminal-based mode). Alternatively, the mobile terminal 2 may also send the generated shortened derivatives (and possibly further information, for instance usable to reduce ambiguities) to server 4, which in turn may then provide a position estimate for the mobile terminal 2 (terminal-assisted mode).

This inter alia allows reducing server resources, transmission bandwidth (transmission costs), transmission duration and/or mobile terminal (and/or server) storage space by only providing the mobile terminal with sets of positioning information associated with shortened derivatives of respective identifiers, and/or to trade off position estimate unambiguousness against transmission bandwidth (transmission costs) and/or transmission duration.

Fig. 2 is a schematic block diagram of an example embodiment of an apparatus 2 according to the invention, e.g. of the first or third apparatus. Apparatus 2 for instance is or forms a part (e.g. as a module) of a mobile terminal, e.g. mobile terminal 2 of Fig. 1. Non-limiting examples of a mobile terminal are a cellular phone, a personal digital assistant, a laptop computer, a tablet computer or a multimedia player.

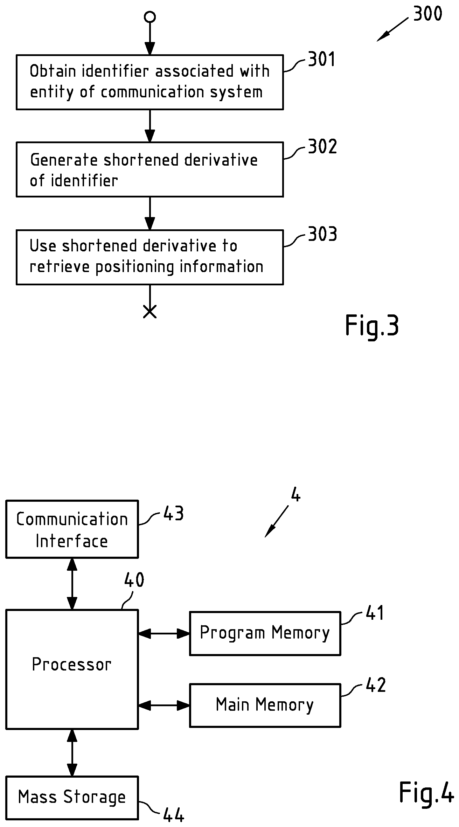

Apparatus 2 comprises a processor 20. Processor 20 may represent a single processor or two or more processors, which are for instance at least partially coupled, for instance via a bus. Processor 20 executes a program code stored in program memory 21 (for instance program code causing apparatus 2 to perform one or more of the embodiments of a method according to the invention (as for instance further described below with reference to Figs. 3, 6 and 7), when executed on processor 20), and interfaces with a main memory 22. Some or all of memories 21 and 22 may also be included into processor 20. One of or both of memories 21 and 22 may be fixedly connected to processor 20 or at least partially removable from processor 20, for instance in the form of a memory card or stick. Program memory 21 may for instance be a non-volatile memory. It may for instance be a FLASH memory (or a part thereof), any of a ROM, PROM, EPROM and EEPROM memory (or a part thereof) or a hard disc (or a part thereof), to name but a few examples. Program memory 21 may also comprise an operating system for processor 20. Program memory 20 may for instance comprise a first memory portion that is fixedly installed in apparatus 2, and a second memory portion that is removable from apparatus 2, for instance in the form of a removable SD memory card. One or more sets of position information, for instance in a database, that are useable by apparatus 2 to determine positions may for instance be stored in program memory 21. Main memory 22 may for instance be a volatile memory. It may for instance be a RAM or DRAM memory, to give but a few non-limiting examples. It may for instance be used as a working memory for processor 20 when executing an operating system and/or programs.

Processor 20 further controls a communication interface 23 configured to receive and/or output information. For instance, communication interface 23 may be configured to exchange information with and/or to identify entities 3-1, 3-2 and 3-3 of system 1 of Fig. 1, and/or to exchange information with server 4 of system 1 (see Fig. 1). This may for instance comprise sending requests for a database (or a part thereof) to server 4 and/or receiving the database (or part thereof) from server 4. This communication may for instance be based on a wireless connection. Communication interface 23 may thus for instance comprise circuitry such as modulators, filters, mixers, switches and/or one or more antennas to allow transmission and/or reception of signals. In embodiments of the invention, communication interface 23 is configured to allow communication according to a 2G/3G/4G cellular communication system and/or a non-cellular communication system, such as for instance a WLAN network. Nevertheless, the communication route between mobile terminal 2 and server 4 may equally well at least partially comprise wire-bound portions. For instance, server 4 may be connected to a back-bone of a wireless communication system (associated with mobile terminal 2) via a wire-bound system such as for instance the internet.

Processor 20 further controls a user interface 24 configured to present information to a user of apparatus 20 and/or to receive information from such a user. Such information may for instance comprise information on a position estimate determined by positioning based on one or more obtained sets of positioning information. User interface 24 may for instance be the standard user interface via which a user of apparatus 2 with apparatus 2 to control other functionality thereof, such as making phone calls, browsing the Internet, etc.

Processor 20 may further control an optional GNSS interface 25 configured to receive positioning information of an GNSS such as Global Positioning System (GPS), Galileo, Global Navigation Satellite System (i.e. "Globalnaja Nawigazionnaja Sputnikowaja Sistema", GLONASS) and Quasi-Zenith Satellite System (QZSS). It should be noted that, even in case apparatus 2 has a GNSS interface 25, the user of apparatus 2 or for instance the mobile terminal comprising apparatus 2 can still benefit from using positioning technologies based on identifiers associated with entities of one or more communication systems, since these technologies may allow for significantly reduced time-to-first-fix and/or lower power consumption as compared to GNSS-based positioning. Also, not all applications on a mobile terminal may require highly accurate GNSS-based position estimates. For instance, for a local weather application, it may be sufficient to use position estimates based on identifiers associated with entities of one or more communication systems. Also, and perhaps even more important, positioning technologies based on identifiers associated with entities of one or more communication systems work indoors, which is generally a challenging environment for GNSS-based technologies.

The components 21-25 of apparatus 2 may for instance be connected with processor 20 by means of one or more serial and/or parallel busses.

Fig. 3 is a flowchart 300 of an exemplary embodiment of a method according to the invention, e.g. of the first method. The steps of flowchart 300 can for instance be performed by apparatus 2 of Fig. 2, for instance when apparatus 2 is deployed as mobile terminal 2 or as a part thereof in the system 1 of Fig. 1. A step performed by apparatus 2 may preferably be understood such that corresponding program code is stored in memory 21 and that the program code and the memory are configured to, with processor 20, cause apparatus 2 to perform the step. Equally well, a step performed by apparatus 2 may preferably be understood such that apparatus 2 comprises according means for performing this step. For instance, communication interface 23 and/or processor 20 may be considered as means for obtaining the identifier associated with an entity of a communication system. Processor 20 may also be considered as means for determining a position estimate for the mobile terminal based on the retrieved set of positioning information associated with the entity of the communication system. Processor 20 may also be considered as means generating a shortened derivative of the identifier from the identifier.

In a first step 301 an identifier associated with an entity of a communication system is obtained. The identifiers may for example be the identifiers of entities 3-1, 3-2, 3-3 with coverage areas 6-1, 6-2, 6-3. Since the mobile terminal 2 is located in each of the coverage areas 6-1, 6-2, 6-3, the mobile terminal 2 is able to obtain (e.g. to observe) each of the three identifiers associated with the entities 3-1, 3-2, 3-3 respectively.

In a second step 302 the method further comprises generating, from the identifier, a shortened derivative of the identifier. The generating of the shortened derivative may for instance be realized by applying a hash function on the obtained identifier. The shortened derivative may in particular be a number with fewer bytes than the identifier form which the shortened derivative was generated. The generating may be performed by processor 20 of Fig. 2, for example.

In a third step 303 the shortened derivative of the identifier is used to retrieve a set of positioning information associated with the entity of the communication system. The set of positioning information may for instance be retrieved from the main memory 22 of apparatus 2 of Fig. 2. The main memory 22 may for instance store a database comprising the set of positioning information.

In a further step, which may also be part of the flow chart 300, a position estimate for a mobile terminal that is or contains apparatus 2 at least based on the set of positioning information retrieved in step 303 may be determined. The position estimate may also be based on, for instance, further information, such as an available position estimate or one or more further obtained sets of positioning information.

In a further step, which is part of the flow chart 300, for instance as a step before step 302, the identifier (and not the shortened derivative thereof) is used to (at least try to) retrieve a set of positioning information associated with the entity of the communication system.

In a further step, which may also be part of the flow chart 300, for instance as a step before step 301, a database at least in part, in particular wirelessly, is obtained from an entity (e.g. server 4) that is different from mobile terminal that is or contains apparatus 2. The database may be stored in main memory 22 of apparatus 2 of Fig. 2.

It is noted that steps 301 - 303 may be performed several times. For instance, if a (part of a) database is obtained as an additional step, the (part of the) database may be used for determining position estimates as long as the mobile terminal comprising apparatus 2 only moves within an area that is covered by the (part of the) database, i.e. for instance covered by the coverage area model information and/or radio channel model information comprised in the sets of positioning information stored in the database obtained before steps 301 - 303. For instance, the area that is covered by the (part of the) database stored locally by apparatus 2, may pertain to a limited geographical area, such as a city, a part of a city, a country, a part of a country etc.

Fig. 4 is a schematic block diagram of an apparatus 4, e.g. of the second or fourth apparatus. Apparatus 4 for instance is or forms a part (e.g. as a module) of a server, e.g. server 4 of Fig. 1.

Apparatus 4 comprises a processor 40. Processor 40 may represent a single processor or two or more processors, which are for instance at least partially coupled, for instance via a bus.

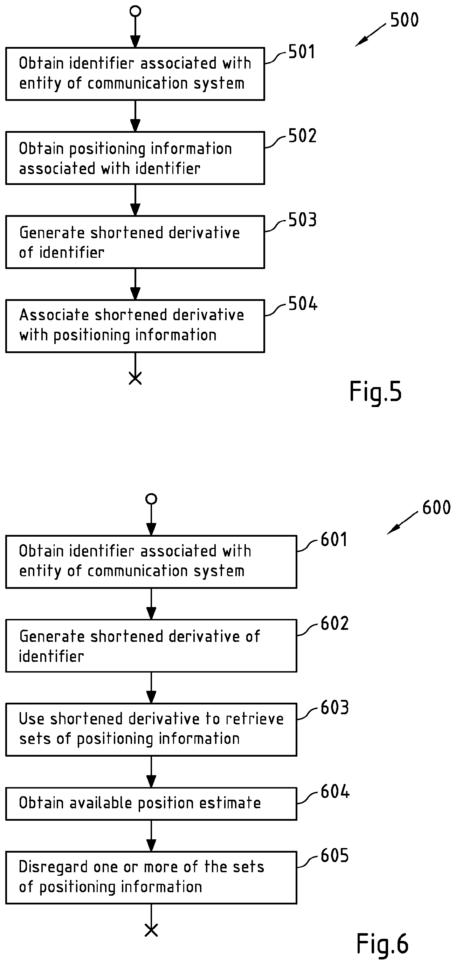

Processor 40 executes a program code stored in program memory 41 (for instance program code causing apparatus 4 to perform a method (as for instance described below with reference to Fig. 5), when executed on processor 40). Processor 40 further interfaces with a main memory 42 (for instance acting as a working memory) and a mass storage 44, which may for instance store a plurality of shortened derivatives of respective identifiers associated with respective entities of one or more communication systems and respective sets of positioning information associated with the respective entities of the one or more communication systems. The shortened derivatives and the respective positioning information may for instance be stored in a database.

Memories 41 and/or 42 may also be included into processor 40. Memories 41 and/or 42 may be fixedly connected to processor 40 or may at least partially be removable from processor 40, for instance in the form of a memory card or stick. Program memory 41 may for instance be a non-volatile memory. It may for instance be a FLASH memory (or a part thereof), any of a ROM, PROM, EPROM and EEPROM memory (or a part thereof) or a hard disc (or a part thereof), to name but a few examples. Program memory 41 may also comprise an operating system for processor 40. Program memory 40 may for instance be implemented as a hard disk. Main memory 42 may for instance be a volatile memory. It may for instance be a RAM or DRAM memory, to give but a few non-limiting examples. It may for instance be used as a working memory for processor 40 when executing an operating system and/or programs. Mass storage 44 may for instance be embodied as mass storage device, for instance with capacities of several Gigabytes or several Terabytes. It may either be fixedly connected to processor 40, or may be releasably connectable thereto. Non-limiting examples of mass storage 44 are a direct-attached storage (DAS), a storage area network (SAN) or a Network-attached storage (NAS).

Processor 40 further controls a communication interface 43 configured to receive and/or output information. For instance, communication interface 43 may be configured to exchange information with mobile terminal 2 of system 1 (see Fig. 1). This may for instance comprise receiving requests from mobile terminal 2 and providing one or more sets of positioning information, e.g. as a database, to mobile terminal 2. This communication may for instance be based on a wireless connection. Communication interface 43 may thus for instance comprise circuitry such as modulators, filters, mixers, switches and/or one or more antennas to allow transmission and/or reception of signals. In embodiments of the invention, communication interface 43 is configured to allow communication according to a 2G/3G/4G cellular communication system and/or non-cellular communication system. Equally well, communication interface 43 may be a wire-bound system interface. It may for instance allow apparatus 2 to communicate with a network such as the internet. The communication route from the server 4 to mobile terminal 2 may then for instance comprise both wire-bound and wireless portions. The wire-bound portion may for instance connect communication interface 43 with a back-bone of a wireless communication system, and the wireless portion may connect the wireless communication system with mobile terminal 2.

The components 41-44 of apparatus 4 may for instance be connected with processor 40 by means of one or more serial and/or parallel busses.

It is to be noted that the circuitry formed by the components of apparatuses 2 and 4 may be implemented in hardware alone, partially in hardware and in software, or in software only, as further described at the end of this specification.

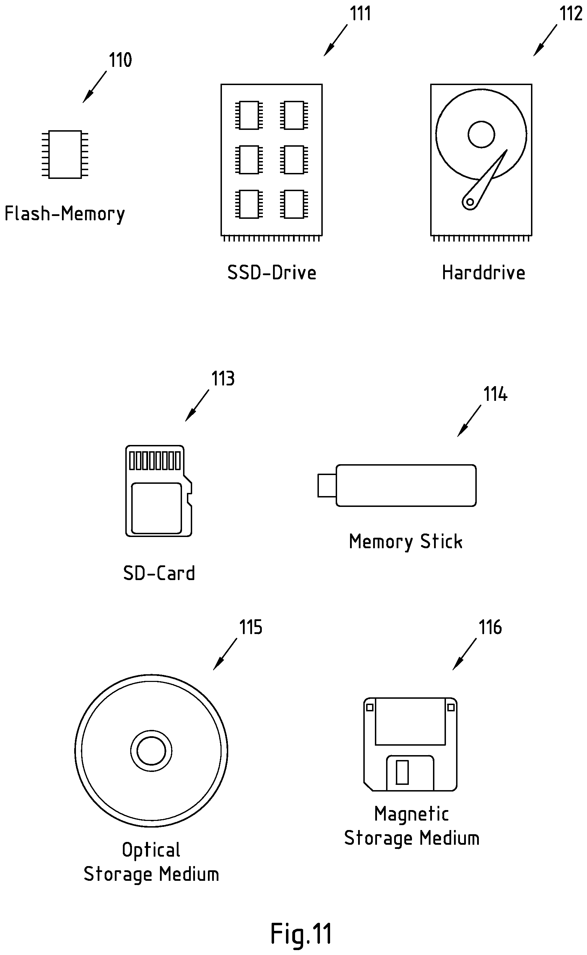

Program memories 21 of Fig. 2 and 41 of Fig. 4 may be considered as tangible storage media, which may in particular be non-transitory storage media. They may comprise respective programs, which in turn comprise respective program code (for instance a set of instructions). Examples of such tangible storage media will be presented with respect to Fig. 11 below.

Fig. 5 is a flowchart 500 of a method, e.g. of the second method. The steps of flowchart 500 can for instance be performed by apparatus 4 of Fig. 4, for instance when apparatus 4 is deployed as server 4 or as a part thereof in the system 1 of Fig. 1. A step performed by apparatus 4 may preferably be understood such that corresponding program code is stored in memory 41 and that the program code and the memory are configured to, with processor 40, cause apparatus 4 to perform the step. Equally well, a step performed by apparatus 4 may preferably be understood such that apparatus 4 comprises according means for performing this step. For instance, mass storage 44 may be considered as means for storing (e.g. in a database) a plurality of shortened derivatives of respective identifiers associated with respective entities of one or more communication systems and respective sets of positioning information associated with the respective entities of the one or more communication systems. Communication interface 43 and/or processor 40 may be considered as means for providing a database or a part thereof to the mobile terminal.

In a first step 501, an identifier associated with an entity of a communication system is obtained. In a second step 502, a set of positioning information associated with the identifier is obtained. The identifier associated with an entity of a communication system and/or the set of positioning information associated with the identifier may be obtained from a database and may be stored in mass storage 44 of apparatus 4, for instance on server 4. However, the identifier associated with an entity of a communication system and/or the set of positioning information associated with the identifier may also be obtained from the mobile terminal 2, for instance in form of a fingerprint.

In a third step 503, a shortened derivative of the identifier is generated from the identifier. Step 503 is similar to step 302. The generating may in this case be performed by processor 40 of apparatus 4 of Fig. 4, for example.

In a fourth step 504, the shortened derivative is associated with the set of positioning information. After associating the shortened derivative with the set of positioning information, the shortened derivative associated with the set of positioning information may be stored in the same or another database, for instance. Again, the shortened derivative associated with the set of positioning information may be stored in mass storage 44 of apparatus 4, for instance on server 4.

However, there may be identifiers associated with entities of one or more communication systems, for which no shortened derivative shall be generated. In that case, there may be a further step in flow chart 500, for instance, before step 503, in which it is decided whether a shortened derivative is to be generated. If a shortened derivative shall be generated, steps 503 and 504 may follow. If no shortened derivative shall be generated, steps 503 and 504 may be skipped for this identifier. Accordingly, instead of storing the shortened derivative associated with the set of positioning information, the identifier associated with the set of positioning information may be stored, for instance in mass storage 44 of apparatus 4, for instance on server 4. It may also be the case that for certain identifiers, both the identifier and the shortened derivative are associated with a respective set of positioning information, which are then stored altogether.

In a further step, which may also be part of the flow chart 500, for instance as a step after step 504, the set of positioning information associated with the identifier and/or the shortened derivative of the identifier may be provided for retrieval by a server (e.g. server 4) and/or a mobile terminal (e.g. mobile terminal 2).

Fig. 6 is a flowchart 600 of another exemplary embodiment of a method according to the invention, e.g. of the first method according to the invention. The steps of flowchart 600 can for instance be performed by apparatus 2 of Fig. 2, for instance when apparatus 2 is deployed as mobile terminal 2 or as a part thereof in the system 1 of Fig. 1, as it was already explained with regard to Fig. 3

The first step 601 and the second step 602 are identical to the first step 301 and the second step 302 of flow chart 300 of Fig. 3. Firstly, an identifier associated with an entity of a communication system is obtained, such as the identifiers of entities 3-1, 3-2, 3-3. Secondly, a shortened derivative of the identifier is generated from the identifier.

In contrast to step 303 of Fig. 3, in step 603 the shortened derivative of the identifier is now used to retrieve (at least) two sets of positioning information associated with different respective entities of one or more communication systems. The two sets of positioning information may for instance be retrieved from the main memory 22 of apparatus 2 of Fig. 2. The program memory 21 may for instance store a database comprising the (at least) two sets of positioning information associated with the (at least) two sets of positioning information. Such a situation may for instance occur, due to ambiguities in the database. For instance, there may be an entity 3-4, as illustrated in Fig. 1 providing an (globally unique) identifier which, when generating a shortened derivative from the identifier, yields the same shortened derivative as a shortened derivative generated from for example one (or more) of the identifiers of the entities 3-1, 3-2, 3-3. When a database with shortened derivatives is created, for instance as explained with reference to Fig. 5, the set of positioning information associated with the entity 3-4 and the set of the positioning information associated with one (or more) of the entities 3-1, 3-2, 3-3 may thus be associated with the same shortened derivative.

When the shortened derivative is then used to retrieve a set of positioning information, as a result more than one set of positioning information, in particular all sets of positioning information associated with the respective shortened derivative may be retrieved.

For instance, assuming that the shortened derivatives of identifiers of entities 3-1 and 3-4 are equal and that the two sets of positioning information retrieved using the shortened derivative are the only sets of positioning information available (for example, because entities 3-2 and 3-3 are not existent or no identifier can be obtained from entities 3-2 and 3-3), then it would not be possible to decide, for example in order to determine a position estimate, whether the apparatus 2 is located in the coverage area 6-1 of entity 3-1 or in the coverage area 6-4 of entity 3-4.

In step 604, an available (e.g. comparably rough) position estimate for the apparatus or for a mobile terminal comprising the apparatus is obtained. The available position estimate may for example be based on a position estimate pertaining to a cellular communication system. The position estimate may for example be requested and performed in case the retrieved sets of positioning information are not unambiguous and would allow more different position estimates. The available position estimate may also be a position estimate which has been determined beforehand.

In a next step 605, (at least) one of the (at least) two sets of positioning information is disregarded based on the available position estimate. The position estimate may for instance limit the geographical area, to which a set of positioning information retrieved must pertain. It may for instance be concluded from the available position estimate, that apparatus or mobile terminal 2 cannot be located in coverage area 6-4 of entity 3-4, but only in coverage area 6-1 of entity 3-1. This may exemplarily be concluded from a lack of geographical overlap between the coverage area 6-4 and the area pertaining to the available position estimate.

Additionally or alternatively to step 604, a set of position information may also be retrieved using an obtained identifier (and not the shortened derivative thereof). Since the identifier itself may be generally less ambiguous (or even unique), in step 605 (at least) one of the (at least) two sets of positioning information may then be disregarded based on the set of position information retrieved using the obtained less ambiguous/unique identifier. For instance, there may be an inconsistency between the one of the (at least) two sets of positioning information and the set of position information retrieved using the obtained less ambiguous/unique identifier.

In a further step, which may also be part of the flow chart 600, a position estimate for a mobile terminal that is or contains apparatus 2 at least based on the set of positioning information retrieved in step 603 and which is not disregarded may be determined. This determined position estimate may be more accurate than the position estimate that was already available. For instance, this may be due to the fact that the available position estimate was based on a cellular communication system (with comparably large coverage areas of the cells) and the determined position estimate is based a non-cellular communication system (e.g. a WLAN, with comparably small coverage areas of the nodes).

It is again noted in this context that even in case apparatus 2 is able to determine position estimates in a different way than using a shortened derivative to retrieve a set of positioning information, the user of apparatus 2 or for instance the mobile terminal comprising apparatus 2 can still benefit from using positioning technologies based on identifiers associated with entities of one or more communication systems, since the latter may allow for an increased accuracy and/or may significantly reduce the time-to-first-fix and/or may allow for a lower power consumption (as compared to GNSS-based positioning, for instance), just to name exemplary scenarios. Another benefit from using positioning technologies based on identifiers associated with entities of one or more communication systems may arise indoors, where there is poor or no reception of satellite signals form satellite based positioning systems.

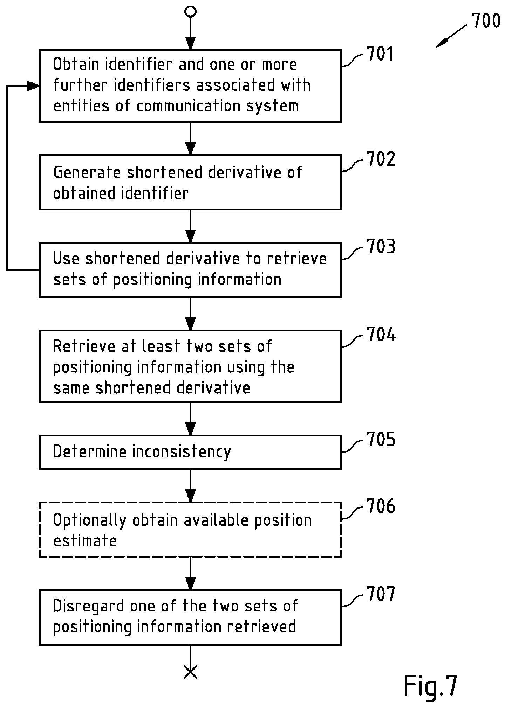

Fig. 7 is a flowchart 700 of another exemplary embodiment of a method according to the invention, e.g. of the first method according to the invention. The steps of flowchart 700 can for instance be performed by apparatus 2 of Fig. 2, for instance when apparatus 2 is deployed as mobile terminal 2 or as a part thereof in the system 1 of Fig. 1, as it was already explained with regard to Figs. 3 and 6.

The first step 701, the second step 702 and the third step 703 are identical to the first step 301, the second step 302 and the third step 303 of flow chart 300 of Fig. 3. However, as already indicated with respect to flow chart 300 of Fig. 3, these steps may be performed multiple times, in which case one or more further identifiers are obtained in step 701, for which respective further shortened derivatives are generated in step 702 and which further shortened derivatives are also used to retrieve sets of positioning information according to step 703.

In step 704, for one of the shortened derivatives used in step 703 there are retrieved (at least) two sets of positioning information. As already explained with respect to Fig. 6, this may happen due to an ambiguity in the database, for instance. For instance, assume as before that the shortened derivatives of identifiers of entities 3-1 and 3-4 are equal and that the two sets of positioning information retrieved using the shortened derivative are the sets of positioning information associated with entities 3-1 and 3-4. However, in contrast to the example given with respect to Fig. 6, further sets of positioning information are now retrieved, because further identifiers of entities 3-2 and 3-3 can be obtained, assuming the mobile terminal 2 is also in the coverage areas 6-2 and 6-3 of entities 3-2 and 3-3 respectively, as it is indicated in Fig. 1.

In step 705, an inconsistency between one of the two sets of positioning information (pertaining to entities 3-1 and 3-4) and at least one of the respective further sets of positioning information (pertaining to entities 3-2 and 3-3) is determined. The inconsistency may be a lack of commonality in the respective positioning information. For instance, to return to above exemplary scenario, there is an inconsistency in the form of a lack of commonality in the respective positioning information due to non overlapping coverage areas between the coverage area 6-3 of entity 3-2 and coverage area 6-4 of entity 3-4 (and also between the coverage area 6-3 of entity 3-3 and coverage area 6-4 of entity 3-4).

As indicated in step 707, as a result (at least) one set of positioning information of the two sets of positioning information can be disregarded. In the above example, consequently, the set of positioning information associated with entity 3-4 would be disregarded.

Again, it may be the case that for an obtained identifier the obtained identifier (and not the shortened derivative thereof) may be used to obtain a set of positioning information in steps 702 and 703. In step 705, there may then be an inconsistency between the one of the (at least) two sets of positioning information and the set of position information retrieved using the obtained (less ambiguous/unique) identifier. In step 707 (at least) one of the (at least) two sets of positioning information may then be disregarded based on the set of position information retrieved using the obtained less ambiguous/unique identifier.

Flow chart 700 indicates in a further optional step 706 that an available (e.g. comparably rough) position estimate for the apparatus or for a mobile terminal comprising the apparatus may be obtained. Step 706 is identical to step 604 of flow chart 600 of Fig. 6. In case an available position estimate is obtained, the disregarding of one of the two sets of positioning information retrieved may also be based on the available position estimate. There may also be certain sets of positioning information which may be disregarded based on a determined inconsistency and certain sets of positioning information which may be disregarded based on the available position estimate, for instance.

In a further step, which may also be part of the flow chart 700, a position estimate for a mobile terminal that is or contains apparatus 2 at least based on the set of positioning information retrieved in step 703/704 and which is not disregarded may be determined.

To name another exemplary situation, which may arise in the above exemplary scenario illustrated with respect to Fig. 7, it may be possible that the generated shortened derivatives of two of the obtained identifiers of entities of a communication system, for instance the generated shortened derivatives of identifiers of entities 3-1 and 3-2, are equal. If the shortened derivative is then used to retrieve a set of positioning information and assuming that respective positioning information is available, two sets of positioning information will be retrieved (the two sets of positioning information pertaining to entities 3-1 and 3-2). In that case no set of positioning information needs to be disregarded or excluded, since also two identifiers generating the same shortened derivative were obtained at the mobile terminal, i.e. the ambiguity caused by the shortened derivative has no or nearly no negative effect on a position estimate. It may only be ambiguous, which of the two sets of positioning information pertains to which of the observed identifiers of entities 3-1 and 3-2, since they relate to the respective sets of positioning information over the same shortened derivative. This may, however, only have a no or minor influence on the accuracy of a position estimate.

In case more sets of positioning information are retrieved using a shortened derivative than there are identifiers obtained, that generate the respective (equal) shortened derivative, these additional sets of positioning information may be excluded. For instance, if the generated shortened derivative of the identifier being associated with entity 3-4 is also equal to the generated shortened derivatives of identifiers of entities 3-1 and 3-2, then three sets of positioning information may be retrieved. It is clear, that one set of positioning information needs to be excluded in this case (since only two identifiers have been obtained). The set of positioning information being associated with the entity 3-4 may, however, even be disregarded due to two reasons in this case. Firstly, there is an inconsistency between the three sets of positioning information associated with the entities 3-1, 3-2 and 3-4. While the sets of positioning information associated with entities 3-1 and 3-2 have an at least in part common coverage area, the set of positioning information associated with entity 3-4 lacks such a common coverage area with each of the sets of positioning information associated with entities 3-1 and 3-2. Secondly, the set of positioning information being associated with the entity 3-4 may be also be disregarded, because the set of positioning information retrieved and associated with entity 3-3 does not have an at least in part common coverage area with the set of positioning information associated with entity 3-4.

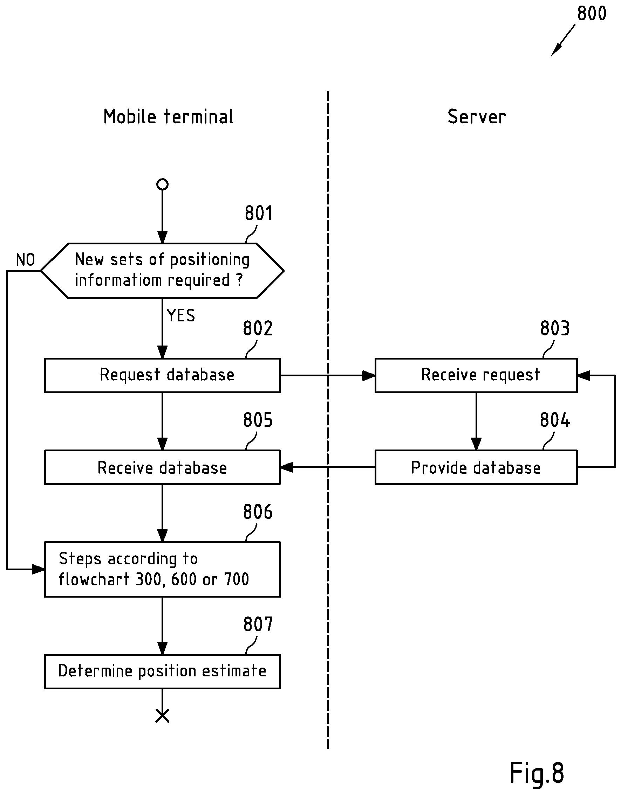

Fig. 8 is a flowchart 800 of an exemplary interaction of mobile terminal 2 and server 4 of the system of Fig. 1. Therein, the actions taken by mobile terminal 2 are presented on the left side of Fig. 8, whereas the actions taken by server 4 are presented on the right side of Fig. 8. The actions taken by mobile terminal 2 can of course be performed by apparatus 2 of Fig. 2, and the actions taken by server 4 can of course be taken by apparatus 4 of Fig. 4.

In a first step 801, the mobile terminal 2 checks whether a new set of positioning information is required. This may for instance be the case if no set of positioning information is available at mobile terminal 2 for the region in which mobile terminal 2 is currently located, for instance because mobile terminal 2 is activated for the first time in this region or because mobile terminal has just been moved into this region, to give but a few examples.

If the finding in step 801 is true, a request for a database (or a part thereof), e.g. comprising sets of positioning information and/or respective shortened derivatives , is launched by mobile terminal 2 to server 4 in step 802. This request may for instance comprise information identifying or allowing identifying a geographical region for which the database is desired or required by the mobile terminal 2. This information may for instance comprise a cell ID identifying a current cell (and thus the associated (serving) node) of a cellular communication system. This cell ID may for instance be part of a hierarchy of area identifiers used in the cellular communication system, for instance as follows for 2G/3G/4G cellular communication systems, respectively:
- 2G Cell Info: Mobile Country code (MCC) - Mobile Network Code (MNC) - Local Area Code (LAC) - Cell Identity (CID)
- 3G Cell Info: Mobile Country code (MCC) - Mobile Network Code (MNC) - UTRAN Cell ID (UC-ID); (Note: The UC-ID may in some implementations have a fine structure with RNC-ID (Radio Network Controller) and Cell ID within the UC-ID.)
- 4G Cell Info: Mobile Country code (MCC) - Mobile Network Code (MNC) - LTE Cell Identity

Additionally or alternatively, the request may for instance comprise information about one or more nodes (e.g. APs) of a non-cellular communication system (e.g. a WLAN) for a desired/required region. Such information may be an identifier of the node (such as a BSSID).

Based on above information, then a geographical region for which the database is desired or required by the mobile terminal may be determined, for instance by the server receiving the request in step 803. For instance, the extent of the geographical region for which the database is provided may be pre-defined, for instance as a specific (larger) region which comprises the identified geographical region for which the database is desired/required. For instance, sets of positioning information associated with shortened derivatives pertaining to the city, the area, the country or the continent, which comprises the identified geographical region for which the database is desired/required, may be provided.

Additionally or alternatively, an already available position estimate may be included into the request for the database, and the region for which the database is required/desired may then be identified based on this position estimate.

The above information provided by mobile terminal 2 in a request for positioning information may for instance be used to identify sets of positioning information having coverage area models and/or radio channel models of entities (e.g. APs) of a (non-cellular) communication system (e.g. a WLAN) for the desired/required region.

For instance, sets of positioning information may pertain to one or more grid elements of a grid of regions (e.g. a grid with rectangular regions covering the Earth surface). Based on the information provided in the request, then for instance a grid element comprising the geographical region for which the database is desired/required may be identified, and this grid element (or this grid element and one or more neighboring grid elements for instance chosen to arrive at a pre-defined size of a region, e.g. 2x2, 4x4 or 6x6 km, to name but a few examples) may be provided as the region for which the database is required/desired. The sets of positioning information may then for instance comprise the coverage area models and/or the radio channel models for those entities that have coverage areas at least partially overlapping this region.

As described above, the request launched by mobile terminal 2 in step 802 may contain information identifying or allowing identifying a geographical region for which the database is desired or required. Alternatively, no such information may be provided, and then the request for the database is for instance considered to relate to a predefined region, e.g. to all regions for which information is available.

In step 803, the request is received at server 4. The server 4 may then for instance use information on the geographical region for which the database is required/desired by the mobile terminal to identify a plurality of sets of positioning information that at least partially pertain to this geographical region.

In step 804, the database, comprising the sets of positioning information associated with respective shortened derivatives and/or respective shortened derivatives, is then provided from server 4 to mobile terminal 2. The flow of actions of server 4 then jumps back to step 803, i.e. server 4 awaits further requests from mobile terminal 2 (or from other mobile terminals).

At mobile terminal 2, the database is received in step 805. For instance, an already existing database a mobile terminal 2 may be updated with the received database.

In step 806, which is also entered, if the finding in step 801 above is false, mobile terminal 2 may for instance perform steps of method 300, 600 and/or 700 of Figs. 3, 6 and 7, respectively.

In step 807, mobile terminal 2 then determines a position estimate for itself based on the sets of positioning information obtained in step 806, as already described above. This may for instance be the case if an application of the mobile terminal requires a position estimate. Equally well, a position estimate could be required at the mobile terminal in regular time intervals. The position estimate(s) may for instance be displayed to a user of the mobile terminal or further processed by an application of the mobile terminal, e.g. an application relating to navigation or other location based services.

Embodiments of the present invention thus achieve less burden for server resources, network resources and/or lower data costs to the consumer, when sets of positioning information associated with respective shortened derivatives are downloaded to the mobile terminal.

It becomes clear from Fig. 8, that once there are sets of positioning information available at mobile terminal 2 and the mobile terminal 2 is located in a region covered by the available sets of positioning information, steps 806 and also step 807 may be repeated as many times as necessary without requesting new sets of positioning information. Thus, mobile terminal 2 does for instance not need an internet connection for further position estimates, as long as mobile terminal 2 is located in a region covered by the sets of positioning information available at mobile terminal 2. Mobile terminal 2 may therefore determine position estimates in an offline mode, for example. However, the obtaining of the identifiers of the entities of the one or more communication system needs to be possible, e.g. as in steps 301, 601, 701. Therefore an offline mode is understood to be a mode, where no constant data connection is necessary.

An exemplary embodiment illustrating the generating of shortened derivatives of 400,000 identifiers is shown in Table 1 below. In this case it is assumed, that the communication system is a WLAN system, e.g. an IEEE 802.11 system, that the entities of the WLAN system are WLAN APs and that the identifiers of the WLAN APs of the WLAN system are (globally unique) BSSIDs. However, it is clear, that for a person skilled in the art various aspects of the following example also apply to identifiers, entities and communication systems of different kinds.

**Table 1: identifiers and their respective shortened derivatives**

| **Identifier (BSSID)** | **shortened derivative (CRC-16 ITU-T hash value)** |
|---|---|
| 159277197314 | 1 |
| 129985488013314 | 1 |
| 84552717047825 | 1 |
| 9965366120 | 1 |
| 211377057097774 | 1 |
| 104011404515375 | 1 |
| 213404909996045 | 2 |
| 99650930708 | 2 |
| 187016624279577 | 2 |
| 117524172179492 | 2 |
| 158180704300 | 2 |
| 169424432029749 | 2 |
| ... | ... |

The (globally unique) BSSIDs are in this case 6-byte numbers, which can have a value in the range of [0, 2⁴⁸-1]. Examples of BSSIDs are shown in the left column of Table 1. In order to generate a shortened derivative a cyclic redundancy check is performed with the so called CRC-16 ITU-T algorithm to generate a hash value. This algorithm uses a generation polynomial G of the form G(x) = 1 + x⁵ + x¹² + x¹⁶. The generation of the hash value according to the CRC-16 ITU-T algorithm is shown in the below function exemplarily coded in MATLAB (http://www.mathworks.de/products/matlab/) and returning the hash value.

```
 FUNCTION UNITOUT=CRC16(UnitIn)
         [BitsNum,~]=length(UnitIn);
        SR=ones (16, 1) ;
        FOR Idx=1:1:BitsNum
                s1=bitxor (Unit (Idx), SR(16,1));
                 s5=bitxor(s1,SR(5,1)) ;
                 s12=bitxor(s1,SR(12,1)) ;
                SR=[s1; SR(1:15)];
                SR(6,1)=s5;
                SR(13,1)=s12;
        END
        UnitOut=flipud(SR);
 END
```

The shortened derivatives are in this case 2-byte numbers, which can have a value in the range of [0, 2¹⁶-1], which is a value from 0 to 65,535. Due to this smaller range multiple BSSIDs map to the same hash value, i.e. the identifier is mapped onto the shortened derivative by means of many-to-one mapping. As can be seen in Table 1, the first exemplary six BSSIDs are all mapped to the shortened derivative with the value 1, while the succeeding exemplary six BSSIDs are all mapped to the shortened derivative with the value 2.

Generally, it is advantageous, that the mapping is as uniform as possible, mapping the expected inputs (the possible identifiers) as evenly as possible over the possible output range (the possible shortened derivatives). Theoretically, if all possible 6-byte BSSIDs are mapped to the 2-byte shortened derivatives and assuming that the BSSIDs are evenly mapped to the shortened derivatives, then there are 2³² BSSIDs mapping to the same shortened derivative, which would result in a significant ambiguity, for instance in a database storing mainly the shortened derivatives and respective sets of positioning information, but not the identifiers.

However, in practice, this will not be the case, since not all BSSIDs are allocated and limited geographical regions comprise significantly fewer APs and thus BSSIDs.

Therefore, assuming the (more realistic) case where 25.4 million (unique) BSSIDs from a limited geographical area, such as a city, have been hashed to generate shortened derivatives according to the above CRC-16 ITU-T algorithm. In the optimal case, the 25.4 million BSSIDs should be evenly mapped onto the 2¹⁶ shortened derivatives in the range of [0, 65,535]. An even mapping would mean that 387 BSSIDs should map onto each possible value of a shortened derivative.

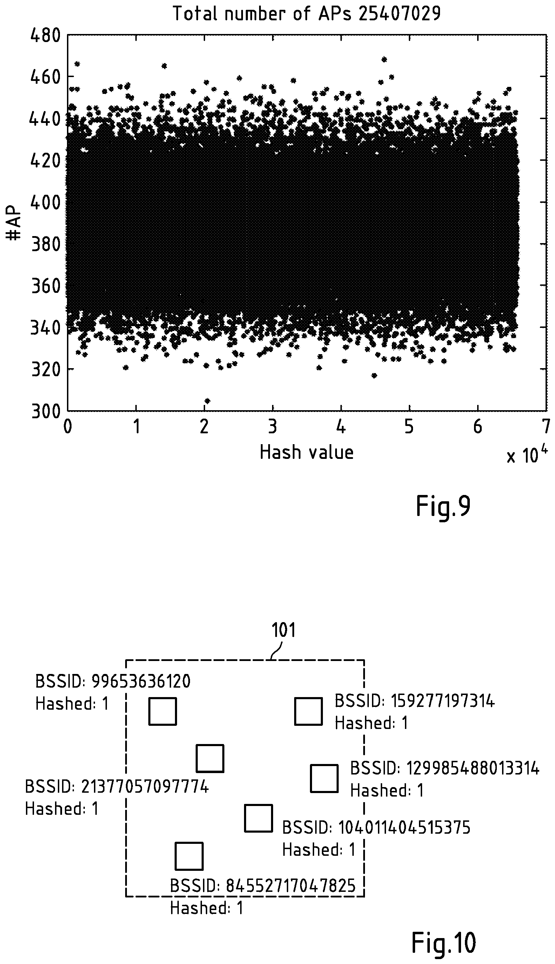

Fig. 9 illustrates an exemplary distribution of the number of identifiers being mapped onto the same shortened derivatives. Fig. 9 shows a coordinate system illustrating how the 25.4 million identifiers of above example are distributed in the output range of [0, 65,535], when they are mapped onto a 2-byte number using the CRC-16 ITU-T algorithm. The x-axis shows the different possible hash values (shortened derivatives) from 0 to 65,535. The y-axis shows the number of BSSIDs (and thus the number of APs) which are mapped onto a specific possible hash value. As can be seen, the BSSIDs get distributed evenly throughout the output range of [0, 65,535]. The number of BSSIDs mapped to each value of the range [0, 65,535] varies between 305 and 468 with a mean of 387 and a standard variation of 19. Due to the even distribution of BSSIDs over the output range of [0, 65,535] and due to the expected average of 387, it can be deduced that the CRC-16 ITU-T is advantageous when used for mapping the BSSIDs to the respective shortened derivatives. As a result, by compressing the 6-byte BSSIDs to the 2-byte shortened derivatives 2/3 in data transfer and/or storage space is saved, for example.

However, other generator polynomials may be used as well. In particular, other CRC algorithms, such as SHA, CRC-16-IBM, CRC-16-CCITT etc., may also be suitable and may in particular produce an even distribution. Equally well, other hash functions than CRC algorithms, such as for example table lookups etc., may be used.

Fig. 10 illustrates an exemplary embodiment of a rectangular geographical region 101. The geographical region may for instance be a 2 × 2 km region containing the above mentioned 400,000 APs, for example. The BSSIDs of the APs are mapped onto shortened derivatives as was exemplarily indicated in Table 1. The first six BSSIDs of Table 1 are also drawn into the region 101 in Fig. 10. Assume that a mobile terminal, for instance mobile terminal 2, has a local copy of a database comprising shortened derivatives of the BSSIDs of the 400,000 APs and associated positioning information. Due to the reduced size of the shortened derivatives compared to the identifiers the size of the database may be reduced. However, this leads to the ambiguities already mentioned. For instance, if the mobile terminal obtains a BSSID, for instance "159277197314", which is associated with the respective AP, and generates form the BSSID the shortened derivative according to the CRC-16 ITU-T algorithm, the mobile terminal will in this example get a shortened derivative of "1", as illustrated in Table 1. However, since there are six different APs and BSSIDs, all leading to an equal shortened derivative of "1" (as also illustrated in Table 1), the mobile terminal will retrieve six different sets of positioning information from the local copy of the database covering the geographical area of Fig. 10. As an example, the different positions of the APs, which may be a part of the respective sets of positioning information, are illustrated in Fig. 10 as well. If a position estimate of the mobile terminal had to be determined only on the basis of the shortened derivative "1", it would not be possible to decide which of the six BSSIDs the mobile terminal had obtained and what the position of the mobile terminal is.

However, there is rarely the case where there is just one AP and/or where there is also no further information on the position of the mobile terminal, such as an available position estimate. For instance, there may be the case, where the mobile terminal is running in a mode of continuous location awareness, in which a background process (roughly) keeps tack of the location, for instance using nodes or cells of a cellular communication system or using nodes of non-cellular communication system. The known (rough) position estimate can be used to limit the area, in which the mobile terminal is located. For example, in the case described above with respect to Fig. 10, it might be known a-priori that the mobile terminal is in a limited area in the upper right hand corner of the tile. Based on this information, it can be concluded that the set of position information belonging to the AP in the upper right hand corner is to be used and the further sets of positioning information can be disregarded for a position estimate of the mobile terminal.

The known (rough) position estimate may also be obtained by performing a cell based positioning first, to get a rough estimate of the position of the mobile terminal. In case sets of positioning information have to be received from a server, the mobile terminal may only request sets of positioning information for the geographical area of the first rough position estimate, for instance of the upper right hand corner of the region 101. This may further reduce the data transfer and/or mitigate ambiguities.

To name another example, the ambiguity related to the shortened derivative may also be mitigated or solved, if there are sets of positioning information stored in the local copy of the database at the mobile terminal, which are associated to the (globally unique) identifier. In other words, the generating of a shortened derivative was only performed for a subset of identifiers, when the database was generated. There are thus sets of positioning information stored in the database associated with the identifier itself and not (or not only) with the shortened derivative of the identifier. If the mobile terminal obtains an identifier, for which the identifier itself is stored and associated with a respective set of positioning information in the database, an ambiguity may in this way at least be mitigated. For instance, if for the first BSSID, instead of the shortened derivative "1" with a respective set of positioning information, the BSSID "159277197314" with a respective set of positioning information was stored in the database, the ambiguity regarding the six APs illustrated in Fig. 10 would be solved, even though the further five BSSIDs are still mapping to the same shortened derivative "1".

Fig. 11 illustrates examples of tangible storage media that may for instance be used to implement program memory 21 of Fig. 2 and/or program memory 41 of Fig. 4. To this end, Fig. 11 displays a flash memory 110, which may for instance be soldered or bonded to a printed circuit board, a solid-state drive 81 comprising a plurality of memory chips (e.g. Flash memory chips), a magnetic hard drive 112, a Secure Digital (SD) card 113, a Universal Serial Bus (USB) memory stick 114, an optical storage medium 115 (such as for instance a CD-ROM or DVD) and a magnetic storage medium 116.

Any presented connection in the described embodiments is to be understood in a way that the involved components are operationally coupled. Thus, the connections can be direct or indirect with any number or combination of intervening elements, and there may be merely a functional relationship between the components.

Further, as used in this text, the term 'circuitry' refers to any of the following:
(a) hardware-only circuit implementations (such as implementations in only analog and/or digital circuitry)
(b) combinations of circuits and software (and/or firmware), such as: (i) to a combination of processor(s) or (ii) to portions of processor(s)/ software (including digital signal processor(s)), software, and memory(ies) that work together to cause an apparatus, such as a mobile phone, to perform various functions) and
(c) to circuits, such as a microprocessor(s) or a portion of a microprocessor(s), that require software or firmware for operation, even if the software or firmware is not physically present.

This definition of 'circuitry' applies to all uses of this term in this text, including in any claims. As a further example, as used in this text, the term 'circuitry' also covers an implementation of merely a processor (or multiple processors) or portion of a processor and its (or their) accompanying software and/or firmware. The term 'circuitry' also covers, for example, a baseband integrated circuit or applications processor integrated circuit for a mobile phone.

Any of the processors mentioned in this text, in particular but not limited to processors 20 and 40 of Figs. 2 and 4, could be a processor of any suitable type. Any processor may comprise but is not limited to one or more microprocessors, one or more processor(s) with accompanying digital signal processor(s), one or more processor(s) without accompanying digital signal processor(s), one or more special-purpose computer chips, one or more field-programmable gate arrays (FPGAS), one or more controllers, one or more application-specific integrated circuits (ASICS), or one or more computer(s). The relevant structure/hardware has been programmed in such a way to carry out the described function.

Moreover, any of the actions described or illustrated herein may be implemented using executable instructions in a general-purpose or special-purpose processor and stored on a computer-readable storage medium (e.g., disk, memory, or the like) to be executed by such a processor. References to 'computer-readable storage medium' should be understood to encompass specialized circuits such as FPGAs, ASICs, signal processing devices, and other devices.

It will be understood that all presented embodiments are only exemplary, and that any feature presented for a particular exemplary embodiment may be used with any aspect of the invention on its own or in combination with any feature presented for the same or another particular exemplary embodiment and/or in combination with any other feature not mentioned. It will further be understood that any feature presented for an example embodiment in a particular category may also be used in a corresponding manner in an example embodiment of any other category.

## Claims

1. Method (300; 600; 700; 800) performed by an apparatus (2), the method comprising:
- obtaining (301; 601; 701) an identifier associated with an entity (3-1, 3-2, 3-3, 3-4) of a communication system, said entity providing radio coverage in an area,
- using said identifier to try retrieving a set of positioning information associated with said entity (3-1, 3-2, 3-3, 3-4) of said communication system, and
- if a set of positioning information associated with said entity (3-1, 3-2, 3-3, 3-4) of said communication system cannot be retrieved using said identifier:
- generating (302; 602; 702), from said identifier, a shortened derivative of said identifier, and
- using (303; 603; 703) said shortened derivative of said identifier to retrieve a set of positioning information associated with said entity (3-1, 3-2, 3-3, 3-4) of said communication system.

2. Method (300; 600; 700; 800) according to claim 1, wherein said set of positioning information is retrievable from a database that stores a plurality of shortened derivatives of respective identifiers associated with respective entities (3-1, 3-2, 3-3, 3-4) of one or more communication systems and respective sets of positioning information associated with said respective entities (3-1, 3-2, 3-3, 3-4) of said one or more communication systems.

3. Method (300; 600; 700; 800) according to claim 2, wherein said database further stores one or more identifiers associated with respective entities (3-1, 3-2, 3-3, 3-4) of one or more communication systems and respective positioning information associated with said respective entities (3-1, 3-2, 3-3, 3-4) of said one or more communication systems.

4. Method (300; 600; 700; 800) according to claim 3, wherein at least one identifier stored in said database is used to retrieve a respective set of positioning information associated with said respective entity (3-1, 3-2, 3-3, 3-4) of said one or more communication systems without generating a shortened derivative for said at least one identifier stored in said database.

5. Method (300; 600; 700; 800) according to any of the claims 2-4, wherein said shortened derivative generated from said identifier associated with said entity (3-1, 3-2, 3-3, 3-4) of said communication system is not unique among said plurality of shortened derivatives of identifiers stored in said database.

6. Method (300; 600; 700; 800) according to claim 5, wherein said identifier associated with said entity (3-1, 3-2, 3-3, 3-4) of said communication system is less ambiguous among said identifiers associated with said respective entities (3-1, 3-2, 3-3, 3-4) of said one or more communication systems for which a plurality of shortened derivatives is stored in said database than its shortened derivative among the plurality of shortened derivatives stored in said database.

7. Method (600; 700; 800) according to any of the claims 5-6, wherein at least two sets of positioning information associated with different respective entities (3-1, 3-2, 3-3, 3-4) of said one or more communication systems are retrieved from said database using said shortened derivative and wherein at least one set of positioning information of said at least two sets of positioning information is disregarded (605; 707).

8. Method (600; 800) according to claim 7, wherein at least one set of positioning information of said at least two sets of positioning information is disregarded (605) at least based on said at least one set of positioning information retrieved using said at least one identifier stored in said database without generating a shortened derivative for said at least one identifier stored in said database.

9. Method (600; 800) according to any of the claims 7-8, wherein at least one set of positioning information of said at least two sets of positioning information is disregarded (605) at least based on an available position estimate for said apparatus (2) or for a mobile terminal comprising said apparatus (2).

10. Method (700; 800) according to any of the claims 7-9, said method further comprising:
- obtaining (701) one or more further identifiers associated with respective entities (3-1, 3-2, 3-3, 3-4) of one or more communication systems,
- generating (702), from said one or more further identifiers, respective shortened derivatives of said one or more further identifiers,
- using (703) said respective shortened derivatives of said one or more further identifiers to retrieve respective sets of positioning information associated with said respective entities (3-1, 3-2, 3-3, 3-4) of said one or more communication systems from said database,
wherein at least one set of positioning information of said at least two sets of positioning information that are associated with different respective entities (3-1, 3-2, 3-3, 3-4) of said one or more communication systems and are retrieved from said database using said shortened derivative is disregarded (707) at least based on a determined (705) inconsistency between said at least one disregarded set of positioning information and at least one of said respective sets of positioning information retrieved using said respective shortened derivatives of said one or more further identifiers.

11. Method (700; 800) according to claim 10, wherein said inconsistency between said at least one disregarded set of positioning information and said at least one of said respective sets of positioning information retrieved using said respective shortened derivatives of said one or more further identifiers is determined (705) from a lack of commonality in positioning information between said at least one disregarded set of positioning information and said at least one of said respective sets of positioning information retrieved using said respective shortened derivatives of said one or more further identifiers.

12. Method (800) according to any of the claims 1-11, wherein said apparatus (2) is one of a mobile terminal and a part thereof, said method (800) further comprising:
- determining (807) a position estimate for said mobile terminal at least based on at least one of said retrieved set of positioning information.

13. Method (800) according to any of the claims: 2-11, said method (800) further comprising:
- obtaining (805) said database at least in part, in particular wirelessly, from an entity (4) that is different from said apparatus (2) or that is different from a mobile terminal that comprises said apparatus (2).

14. A computer program code, the computer program code when executed by a processor (20) causing an apparatus (2) to perform the actions of the method (300; 600; 700; 800) of any of the claims 1-13.

15. An apparatus (2) comprising means adapted to carry out the method (300; 600; 700; 800) of any of the claims 1-13.

## Patentansprüche

1. Verfahren (300; 600; 700; 800), durchgeführt durch eine Vorrichtung (2), das Verfahren umfassend:
- Erlangen (301; 601; 701) einer mit einer Entität (3-1, 3-2, 3-3, 3-4) eines Kommunikationssystems assoziierten Kennung, wobei die Entität Funkabdeckung in einem Gebiet bereitstellt,
- Verwenden der Kennung um zu versuchen, eine Menge von mit der Entität (3-1, 3-2, 3-3, 3-4) des Kommunikationssystems assoziierten Positionierungsinformationen abzurufen, und
- wenn eine Menge von mit der Entität (3-1, 3-2, 3-3, 3-4) des Kommunikationssystems assoziierten Positionierungsinformationen nicht unter Verwendung der Kennung abgerufen werden kann:
- Erzeugen (302; 602; 702), aus der Kennung, einer verkürzten Ableitung der Kennung und
- Verwenden (303; 603; 703) der verkürzten Ableitung der Kennung zum Abrufen einer Menge von mit der Entität (3-1, 3-2, 3-3, 3-4) des Kommunikationssystems assoziierten Positionierungsinformationen.

2. Verfahren (300; 600; 700; 800) nach Anspruch 1, wobei die Menge von Positionierungsinformationen aus einer Datenbank abrufbar ist, die eine Vielzahl verkürzter Ableitungen jeweiliger mit jeweiligen Entitäten (3-1, 3-2, 3-3, 3-4) eines oder mehrerer Kommunikationssysteme assoziierten Kennungen und jeweilige Mengen von mit jeweiligen Entitäten (3-1, 3-2, 3-3, 3-4) des einen oder der mehreren Kommunikationssysteme assoziierten Positionierungsinformationen speichert.

3. Verfahren (300; 600; 700; 800) nach Anspruch 2, wobei die Datenbank ferner eine oder mehrere mit jeweiligen Entitäten (3-1, 3-2, 3-3, 3-4) eines oder mehrerer Kommunikationssysteme assoziierten Kennungen und jeweilige mit jeweiligen Entitäten (3-1, 3-2, 3-3, 3-4) des einen oder der mehreren Kommunikationssysteme assoziierten Positionierungsinformationen speichert.

4. Verfahren (300; 600; 700; 800) nach Anspruch 3, wobei mindestens eine in der Datenbank gespeicherte Kennung verwendet wird, eine jeweilige Menge von mit der jeweiligen Entität (3-1, 3-2, 3-3, 3-4) des einen oder der mehreren Kommunikationssysteme assoziierten Positionierungsinformationen abzurufen, ohne eine verkürzte Ableitung für die mindestens eine in der Datenbank gespeicherte Kennung zu erzeugen.

5. Verfahren (300; 600; 700; 800) nach einem der Ansprüche 2-4, wobei die aus der mit der Entität (3-1, 3-2, 3-3, 3-4) des Kommunikationssystems assoziierten Kennung erzeugte verkürzte Ableitung unter der Vielzahl verkürzter Ableitungen von in der Datenbank gespeicherter Kennungen nicht eindeutig ist.

6. Verfahren (300; 600; 700; 800) nach Anspruch 5, wobei die mit der Entität (3-1, 3-2, 3-3, 3-4) des Kommunikationssystems assoziierte Kennung unter den mit den jeweiligen Entitäten (3-1, 3-2, 3-3, 3-4) des einen oder der mehreren Kommunikationssysteme assoziierten Kennungen, für die eine Vielzahl verkürzter Ableitungen in der Datenbank gespeichert ist, weniger mehrdeutig ist als ihre verkürzte Ableitung unter der Vielzahl von in der Datenbank gespeicherten verkürzten Ableitungen.

7. Verfahren (600; 700; 800) nach einem der Ansprüche 5-6, wobei mindestens zwei Mengen von mit verschiedenen jeweiligen Entitäten (3-1, 3-2, 3-3, 3-4) des einen oder der mehreren Kommunikationssysteme assoziierten Positionierungsinformationen unter Verwendung der verkürzten Ableitung aus der Datenbank abgerufen werden und wobei mindestens eine Menge von Positionierungsinformationen der mindestens zwei Mengen von Positionierungsinformationen unberücksichtigt gelassen wird (605; 707).

8. Verfahren (600; 800) nach Anspruch 7, wobei mindestens eine Menge von Positionierungsinformationen der mindestens zwei Mengen von Positionierungsinformationen unberücksichtigt gelassen wird (605) zumindest basierend auf der mindestens einen Menge von Positionierungsinformationen, die unter Verwendung der in der Datenbank gespeicherten mindestens einen Kennung, ohne eine verkürzte Ableitung für die in der Datenbank gespeicherte mindestens eine Kennung zu erzeugen, abgerufen wurde.

9. Verfahren (600; 800) nach einem der Ansprüche 7-8, wobei mindestens eine Menge von Positionierungsinformationen der mindestens zwei Mengen von Positionierungsinformationen mindestens basierend auf einer verfügbaren Positionsschätzung für die Vorrichtung (2) oder für ein Mobilendgerät, das die Vorrichtung (2) umfasst, unberücksichtigt gelassen wird (605).

10. Verfahren (700; 800) nach einem der Ansprüche 7-9, das Verfahren ferner umfassend:
- Erlangen (701) einer oder mehrerer weiterer mit jeweiligen Entitäten (3-1, 3-2, 3-3, 3-4) eines oder mehrerer Kommunikationssysteme assoziierten Kennungen,
- Erzeugen (702), aus der einen oder den mehreren weiteren Kennungen, jeweiliger verkürzter Ableitungen der einen oder mehreren weiteren Kennungen,
- Verwenden (703) der jeweiligen verkürzten Ableitungen der einen oder mehreren weiteren Kennungen zum Abrufen jeweiliger Mengen von mit den jeweiligen Entitäten (3-1, 3-2, 3-3, 3-4) des einen oder der mehreren Kommunikationssysteme assoziierten Positionierungsinformationen aus der Datenbank,
wobei mindestens eine Menge von Positionierungsinformationen der mindestens zwei Mengen von Positionierungsinformationen, die mit verschiedenen jeweiligen Entitäten (3-1, 3-2, 3-3, 3-4) des einen oder der mehreren Kommunikationssysteme assoziiert sind und aus der Datenbank unter Verwendung der verkürzten Kennung abgerufen werden unberücksichtigt gelassen wird (707) zumindest basierend auf einer festgestellten (705) Inkonsistenz zwischen der mindestens einen unberücksichtigt gelassenen Menge von Positionierungsinformationen und mindestens einer der jeweiligen Mengen von unter Verwendung der jeweiligen verkürzten Ableitungen der einen oder mehreren weiteren Kennungen abgerufenen Positionierungsinformationen.

11. Verfahren (700; 800) nach Anspruch 10, wobei die Inkonsistenz zwischen der mindestens einen unberücksichtigt gelassenen Menge von Positionierungsinformationen und der mindestens einen der jeweiligen Mengen von unter Verwendung der jeweiligen verkürzten Ableitungen der einen oder mehreren weiteren Kennungen abgerufenen Positionierungsinformationen aus einem Mangel an Gemeinsamkeit der Positionierungsinformationen zwischen der mindestens einen unberücksichtigt gelassenen Menge von Positionierungsinformationen und der mindestens einen der jeweiligen Mengen von unter Verwendung der jeweiligen verkürzten Ableitungen der einen oder mehreren weiteren Kennungen abgerufenen Positionierungsinformationen festgestellt wird (705).

12. Verfahren (800) nach einem der Ansprüche 1-11, wobei die Vorrichtung (2) ein Mobilendgeräts oder ein Teil davon ist, das Verfahren (800) ferner umfassend:
- Bestimmen (807) einer Positionsschätzung für das Mobilendgerät mindestens basierend auf mindestens einer der abgerufenen Mengen von Positionierungsinformationen.

13. Verfahren (800) nach einem der Ansprüche 2-11, das Verfahren (800) ferner umfassend:
- Erlangen (805) der Datenbank mindestens teilweise, insbesondere drahtlos, von einer Entität (4), die von der Vorrichtung (2) verschieden ist oder die von einem Mobilendgerät, das die Vorrichtung (2) umfasst, verschieden ist.

14. Computerprogrammcode, wobei der Computerprogrammcode, wenn er durch einen Prozessor (20) ausgeführt wird, bewirkt, dass eine Vorrichtung (2) die Aktionen des Verfahrens (300; 600; 700; 800) nach einem der Ansprüche 1-13 durchführt.

15. Vorrichtung (2), umfassend Mittel, die angepasst sind, das Verfahren (300; 600; 700; 800) nach einem der Ansprüche 1-13 auszuführen.

## Revendications

1. Procédé (300 ; 600 ; 700 ; 800) exécuté par un appareil (2), le procédé comprenant les étapes suivantes :
- obtenir (301 ; 601 ; 701) un identificateur associé à une entité (3-1, 3-2, 3-3, 3-4) d'un système de communication, ladite entité assurant la couverture radio dans une zone,
- utiliser ledit identificateur pour essayer de récupérer un ensemble d'informations de positionnement associé à ladite entité (3-1, 3-2, 3-3, 3-4) dudit système de communication, et
- si un ensemble d'informations de positionnement associé à ladite entité (3-1, 3-2, 3-3, 3-4) dudit système de communication ne peut pas être récupéré en utilisant ledit identificateur :
- générer (302 ; 602 ; 702), à partir dudit identificateur, un dérivé raccourci dudit identificateur, et
- utiliser (303 ; 603 ; 703) ledit dérivé raccourci dudit identificateur pour récupérer un ensemble d'informations de positionnement associé à ladite entité (3-1, 3-2, 3-3, 3-4) dudit système de communication.

2. Procédé (300 ; 600 ; 700 ; 800) selon la revendication 1, dans lequel ledit ensemble d'informations de positionnement est récupérable auprès d'une base de données qui stocke une pluralité de dérivés raccourcis d'identificateurs respectifs associés à des entités respectives (3-1, 3-2, 3-3, 3-4) d'un ou plusieurs systèmes de communication et des ensembles respectifs d'informations de positionnement associés auxdites entités respectives (3-1, 3-2, 3-3, 3-4) desdits un ou plusieurs systèmes de communication.

3. Procédé (300 ; 600 ; 700 ; 800) selon la revendication 2, dans lequel ladite base de données stocke en outre un ou plusieurs identificateurs associés aux entités respectives (3-1, 3-2, 3-3, 3-4) d'un ou plusieurs systèmes de communication et des informations de positionnement respectives associées auxdites entités respectives (3-1, 3-2, 3-3, 3-4) desdits un ou plusieurs systèmes de communication.

4. Procédé (300 ; 600 ; 700 ; 800) selon la revendication 3, dans lequel au moins un identificateur stocké dans ladite base de données est utilisé pour récupérer un ensemble respectif d'informations de positionnement associé à ladite entité respective (3-1, 3-2, 3-3, 3-4) desdits un ou plusieurs systèmes de communication sans générer un dérivé raccourci pour ledit au moins un identificateur stocké dans ladite base de données.

5. Procédé (300 ; 600 ; 700 ; 800) selon l'une quelconque des revendications 2 à 4, dans lequel ledit dérivé raccourci généré à partir dudit identificateur associé à ladite entité (3-1, 3-2, 3-3, 3-4) dudit système de communication n'est pas unique parmi ladite pluralité de dérivés raccourcis d'identificateurs stockés dans ladite base de données.

6. Procédé (300 ; 600 ; 700 ; 800) selon la revendication 5, dans lequel ledit identificateur associé à ladite entité (3-1, 3-2, 3-3, 3-4) dudit système de communication est moins ambigu parmi lesdits identificateurs associés auxdites entités respectives (3-1, 3-2, 3-3, 3-4) desdits un ou plusieurs systèmes de communication pour lesquels une pluralité de dérivés raccourcis est stockée dans ladite base de données que son dérivé raccourci parmi la pluralité de dérivés raccourcis stockés dans ladite base de données.

7. Procédé (600 ; 700 ; 800) selon l'une quelconque des revendications 5 et 6, dans lequel au moins deux ensembles d'informations de positionnement associés à des entités respectives différentes (3-1, 3-2, 3-3, 3-4) desdits un ou plusieurs systèmes de communication sont récupérés auprès de ladite base de données en utilisant ledit dérivé raccourci, et où au moins un ensemble d'informations de positionnement desdits au moins deux ensembles d'informations de positionnement est ignoré (605 ; 707).

8. Procédé (600 ; 800) selon la revendication 7, dans lequel au moins un ensemble d'informations de positionnement desdits au moins deux ensembles d'informations de positionnement est ignoré (605) au moins sur la base dudit au moins un ensemble d'informations de positionnement récupéré en utilisant ledit au moins un identificateur stocké dans ladite base de données sans générer un dérivé raccourci pour ledit au moins un identificateur stocké dans ladite base de données.

9. Procédé (600 ; 800) selon l'une quelconque des revendications 7 et 8, dans lequel au moins un ensemble d'informations de positionnement desdits au moins deux ensembles d'informations de positionnement est ignoré (605) au moins sur la base d'une estimation de position disponible pour ledit appareil (2) ou pour un terminal mobile comprenant ledit appareil (2).

10. Procédé (700 ; 800) selon l'une quelconque des revendications 7 à 9, ledit procédé comprenant en outre les étapes suivantes :
- obtenir (701) d'un ou plusieurs autres identificateurs associés à des entités respectives (3-1, 3-2, 3-3, 3-4) d'un ou plusieurs systèmes de communication,
- générer (702), à partir desdits un ou plusieurs identificateurs supplémentaires, des dérivés raccourcis respectifs desdits un ou plusieurs identificateurs supplémentaires,
- utiliser (703) lesdits dérivés raccourcis respectifs desdits un ou plusieurs autres identificateurs pour récupérer des ensembles respectifs d'informations de positionnement associés auxdites entités respectives (3-1, 3-2, 3-3, 3-4) desdits un ou plusieurs systèmes de communication auprès de ladite base de données,
où au moins un ensemble d'informations de positionnement desdits au moins deux ensembles d'informations de positionnement qui sont associés à différentes entités respectives (3-1, 3-2, 3-3, 3-4) desdits un ou plusieurs systèmes de communication et qui sont récupérés auprès de ladite base de données en utilisant ledit dérivé raccourci est ignoré (707) au moins sur la base d'une incohérence déterminée (705) entre ledit au moins un ensemble d'informations de positionnement ignoré et au moins un desdits ensembles respectifs d'informations de positionnement récupérés en utilisant lesdits dérivés raccourcis respectifs desdits un ou plusieurs identificateurs supplémentaires.

11. Procédé (700 ; 800) selon la revendication 10, dans lequel ladite incohérence entre ledit au moins un ensemble ignoré d'informations de positionnement et ledit au moins un ensemble desdits ensembles respectifs d'informations de positionnement récupérés en utilisant lesdits identificateurs raccourcis respectifs desdits un ou plusieurs identificateurs supplémentaires est déterminée (705) à partir d'un manque de similarité dans les informations de positionnement entre ledit au moins un ensemble ignoré d'informations de positionnement et ledit au moins un ensemble desdits ensembles respectifs d'informations de positionnement récupérés en utilisant lesdits dérivés raccourcis respectifs desdits un ou plusieurs identificateurs supplémentaires.

12. Procédé (800) selon l'une quelconque des revendications 1 à 11, dans lequel ledit appareil (2) est un appareil parmi un terminal mobile ou une partie de celui-ci, ledit procédé (800) comprenant en outre l'étape suivante :
- déterminer (807) une estimation de position pour ledit terminal mobile, au moins sur la base d'au moins un ensemble dudit ensemble récupéré d'informations de positionnement.

13. Procédé (800) selon l'une quelconque des revendications 2 à 11, ledit procédé (800) comprenant en outre l'étape suivante :
- obtenir (805) ladite base de données au moins en partie, en particulier sans fil, d'une entité (4) qui est différente dudit appareil (2) ou qui est différente d'un terminal mobile qui comprend ledit appareil (2).

14. Code de programme informatique, le code de programme informatique, lorsqu'il est exécuté par un processeur (20), amenant un appareil (2) à exécuter les actions du procédé (300 ; 600 ; 700 ; 800) de l'une quelconque des revendications 1 à 13.

15. Appareil (2) comprenant des moyens adaptés pour exécuter le procédé (300 ; 600 ; 700 ; 800) de l'une quelconque des revendications 1 à 13.
